(19) Europäisches Patentamt
European Patent Office
Office européen des brevets

(11) **EP 4 077 474 B1**

(12) **EUROPÄISCHE PATENTSCHRIFT**

(45) Veröffentlichungstag und Bekanntmachung des Hinweises auf die Patenterteilung:
**20.09.2023   Patentblatt 2023/38**

(21) Anmeldenummer: **20823811.3**

(22) Anmeldetag: **14.12.2020**

(51) Internationale Patentklassifikation (IPC):
*C08G 65/26* (2006.01)    *C08G 65/332* (2006.01)
*C08G 18/42* (2006.01)    *C08G 18/48* (2006.01)
*C08G 101/00* (2006.01)    *C09D 175/04* (2006.01)
*C08G 63/672* (2006.01)    *C08G 63/48* (2006.01)

(52) Gemeinsame Patentklassifikation (CPC):
**C08G 65/2609; C08G 18/4261; C08G 18/4263;
C08G 18/4891; C08G 63/48; C08G 63/672;
C08G 65/2615; C08G 65/3326; C09D 175/04;**
C08G 2101/00; C08G 2110/0025

(86) Internationale Anmeldenummer:
**PCT/EP2020/085883**

(87) Internationale Veröffentlichungsnummer:
**WO 2021/122401 (24.06.2021 Gazette 2021/25)**

(54) **VERFAHREN ZUR HERSTELLUNG VON POLYOXYALKYLENPOLYESTERPOLYOLEN**

METHOD FOR PRODUCING POLYOXYALKYLENE POLYESTERPOLYOLS

PROCÉDÉ DE FABRICATION DE POLYOLS POLYESTER POLYOXYALKYLÈNE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **17.12.2019   EP 19216930**

(43) Veröffentlichungstag der Anmeldung:
**26.10.2022   Patentblatt 2022/43**

(73) Patentinhaber: **Covestro Intellectual Property GmbH & Co. KG
51373 Leverkusen (DE)**

(72) Erfinder:
• **LORENZ, Klaus
41539 Dormagen (DE)**
• **KLEINIG, Frank
41542 Dormagen (DE)**

(74) Vertreter: **Levpat
c/o Covestro AG
Gebäude K12
51365 Leverkusen (DE)**

(56) Entgegenhaltungen:
**WO-A1-2013/110512**

**Beschreibung**

Gegenstand der vorliegenden Erfindung ist ein Verfahren zur Herstellung von Polyoxyalkylenpolyesterpolyolen durch Umsetzung einer Starterverbindung mit Zerewitnoff-aktiven H-Atomen, eines cyclischen Dicarbonsäureanhydrids und eines Fettsäureesters mit einem Alkylenoxid in Gegenwart eines basischen Katalysators. Weitere Erfindungsgegenstände sind auch aus die dem Verfahren resultierenden Polyoxyalkylenpolyesterpolyole sowie ein Herstellungsverfahren von Polyurethanen durch Umsetzung der erfindungsgemäßen Polyoxyalkylenpolyesterpolyole.

Polyole auf Basis nachwachsender Rohstoffe wie Fettsäuretriglyceride, Zucker, Sorbit, Glycerin und Dimerfettalkohole werden bereits in vielfältiger Weise als Rohstoff bei der Herstellung von Polyurethanwerkstoffen verwendet. In Zukunft wird sich der Einsatz solcher Komponenten weiter verstärken, da Produkte aus erneuerbaren Quellen in Ökobilanzen vorteilhaft bewertet werden und die Verfügbarkeit von Rohstoffen auf petrochemischer Basis auf lange Sicht abnehmen wird. Zudem können durch den gezielten Einsatz von Triglyceriden bei der Herstellung von Alkylenoxidadditionsprodukten auf Basis von Startern mit zerewitinoff-aktiven Wasserstoffatomen Polyetheresterpolyole erhalten werden, die sich durch ein erhöhtes Lösungsvermögen für typischerweise in Hartschaumstoffformulierungen verwendete Treibmittel auf Basis von (teilhalogenierten) Kohlenwasserstoffen auszeichnen.

EP 1923417 A1 offenbart ein einstufiges Verfahren zur Herstellung von Polyetheresterpolyolen durch Umsetzung von Starterverbindungen mit zerewitinoff-aktiven Wasserstoffatomen ("H-funktionelle Starterverbindungen") mit Alkylenoxiden unter Basenkatalyse in Gegenwart von Fettsäureestern als erneuerbarem Rohstoff, wobei die Fettsäurereste der Fettsäureester keine freien OH-Gruppen enthalten. Diese Polyether-esterpolyole werden als Komponenten in Formulierungen mit anderen Polyolen in der Herstellung von PUR/PIR-Hartschaumstoffen eingesetzt, wobei sich diese PUR/PIR-Systeme durch ein gutes Entformungsverhalten auszeichnen.

In EP 2807199 A1 wird ein Verfahren zur Herstellung eines Polyoxyalkylenpolyetherester-Polyols durch Umsetzung einer Zwerwitinoff-aktiven Starterverbindung mit Fettsäureestern, Alkylenoxiden unter Verwendung von basischen Imidazol-Katalysatoren offenbart, wobei die Herstellung zusätzlich in Gegenwart eines cyclischen Anhydrids von Dicarbonsäuren erfolgt. Die resultierenden Polyetherester-Polyole werden ebenfalls in der Herstellung von Hartschaumstoffen eingesetzt. Es wird vermutet, dass die Gegenwart der aromatischen Dicarbonsäurebausteine im Polyoxyalkylenpolyesterpolyolendprodukt zu verbesserten Flammschutzeigenschaften führen soll.

In der EP 2807199 A1 wurde es jedoch versäumt, ein Verfahren bereitzustellen, welches zu möglichst hellen Endprodukten führt. Bei der Verwendung aminischer Katalysatoren für die Alkylenoxidaddition, insbesondere solchen auf Basis aromatischer Amine wie beispielsweise dem Imidazol und seinen Derivaten oder N,N-Dimethylaminopyridin, die sich durch a) eine hohe Aktivität auszeichnen und welche sich b) gegenüber der Verwendung von beispielsweise KOH als Alkylenoxidadditionskatalysator dadurch auszeichnen, dass sie im Endprodukt verbleiben können, beobachtet man jedoch, dass sehr stark verfärbte Produkte entstehen. Wenig verfärbte Produkte sind in solchen Anwendungen von Vorteil, die neben technischen auch optischen Anforderungen genügen sollen. Dies gilt beispielsweise für Beschichtungen.

Ausgehend vom Stand der Technik bestand die Aufgabe darin, ein verbessertes Verfahren zur Herstellung von einphasigen Polyoxyalkylenpolyesterpolyolen, insbesondere solchen mit zahlenmittleren Funktionalitäten von größer oder gleich 2, welches zu weniger verfärbten Polyol-Produkten führt, bereitzustellen. Die Polyoxyalkylenpolyesterpolyol-Produkte sollen darüberhinaus über ein einfach durchzuführendes, möglichst energieeffizientes Verfahren zugänglich sein, insbesondere soll sich der bei der Herstellung der Polyetheresterpolyole zuzuführende Mischleistungseintrag in einem technisch leicht zugänglichen Bereich bewegen.

Überraschenderweise konnte die Aufgabe gelöst werden durch ein Verfahren zur Herstellung von Polyoxyalkylenpolyesterpolyolen durch Umsetzung einer Starterverbindung (1) mit Zerewitnoff-aktiven H-Atomen, eines cyclischen Dicarbonsäureanhydrids (2) und eines Fettsäureesters (3) mit einem Alkylenoxid (4) in Gegenwart eines basischen Katalysators (5) umfassend folgende Schritte:

(i) Bereitstellen einer Mischung (i) umfassend die Starterverbindung (1) und den Fettsäureester (3), wobei die Mischung (i) kein cyclisches Dicarbonsäureanhydrid (2) enthält;

(ii) Umsetzung der Mischung (i) aus Schritt (i) mit einer Teilmenge (v1) des Alkylenoxids (4), wobei mindestens 0,15 mol Alkylenoxid (4) pro 1 mol zerewitinoff-aktiver Wasserstoffatome der Starterverbindung (1) zugegeben wird unter Bildung einer Verbindung (ii);

(iii) Umsetzung der in Schritt (ii) gebildeten Verbindung (ii) durch Zugabe des Dicarbonsäureanhydrids (2) unter Bildung einer Verbindung (iii);

(iv) Umsetzung der Verbindung (iii) aus Schritt (iii) mit einer Teilmenge (v2) des Alkylenoxids (4), wobei mindestens 1,15 mol Alkylenoxid (4) pro 1 mol des Dicarbonsäureanhydrids (2) zugegeben wird.

Im Rahmen der vorliegenden Erfindung sind Polyoxyalkylenpolyesterpolyole als Produkte der Reaktion von Starterverbindungen (1) mit Zerewitnoff-aktiven H-Atomen, cyclischen Dicarbonsäureanhydriden (2), Fettsäureestern (3) und Alkylenoxiden (4) zu verstehen, wobei durch die Umsetzung der Fettsäureester und der cyclischen Dicarbonsäureanhydride Estereinheiten erhalten werden und die Ringöffnungsprodukte der Alkylenoxide auch zu Etherbindungen führen können. Aus den Zerewitnoff-aktiven H-Atomen entstehen in einem solchen Verfahren Hydroxylendgruppen und intermediär auch Carboxylfunktionen.

Unter Starterverbindungen (1) mit Zerewitnoff-aktiven H-Atomen (H-funktionelle Starterverbindungen) im Sinne der Erfindung werden Verbindungen verstanden, die mindestens ein Zerewitinoff-aktives Wasserstoffatom aufweisen. An N, O oder S gebundener Wasserstoff wird als Zerewitinoff-aktiver Wasserstoff (oder als "aktiver Wasserstoff") bezeichnet, wenn er nach einem von Zerewitinoff aufgefundenen Verfahren durch Umsetzung mit Methylmagnesiumiodid Methan liefert. Typische Beispiele für Verbindungen mit Zerewitinoff-aktivem Wasserstoff sind Verbindungen, die Carboxyl-, Hydroxyl-, Amino-, Imino- oder Thiol-Gruppen als funktionelle Gruppen enthalten

Geeignete H-funktionelle Starterverbindungen ("Starter") weisen bevorzugt Funktionalitäten von 2 bis 8 auf, in bestimmten Fällen aber auch Funktionalitäten bis 35. Ihre Molmassen betragen von 17 g/mol bis 1.200 g/mol. Neben hydroxyfunktionellen Starterverbindungen können auch aminofunktionelle Starterverbindungen eingesetzt werden. Bevorzugte Starter besitzen Funktionalitäten größer oder gleich 2 bis kleiner oder gleich 4. Beispiele für hydroxyfunktionelle Starterverbindungen sind Propylenglykol, Ethylenglykol, Diethylenglykol, Dipropylenglykol, 1,2-Butandiol, 1,3-Butandiol, 1,4-Butandiol, Hexandiol, Pentandiol, 3-Methyl-1,5-pentandiol, 1,12-Dodecandiol, Glycerin, Trimethylolpropan, Triethanolamin, Pentaerythrit, Sorbitol, Saccharose, Hydrochinon, Brenzcatechin, Resorcin, Bisphenol F, Bisphenol A, 1,3,5-Trihydroxybenzol, methylolgruppenhaltige Kondensate aus Formaldehyd und Phenol oder Melamin oder Harnstoff, sowie Mannichbasen. Es können auch hochfunktionelle Starterverbindungen auf Basis von hydrierten Stärkehydrolyseprodukten eingesetzt werden. Solche sind beispielsweise in EP-A 1 525 244 beschrieben. Beispiele für aminogruppenhaltige Starterverbindungen sind Ammoniak, Ethanolamin, Diethanolamin, Isopropanolamin, Diisopropanolamin, Ethylendiamin, Hexamethylendiamin, Anilin, die Isomere des Toluidins, die Isomere des Diaminotoluols, die Isomere des Diaminodiphenylmethans sowie bei der Kondensation von Anilin mit Formaldehyd zu Diaminodiphenylmethan anfallende höherkernige Produkte.

Die Starterverbindungen (1) werden entweder einzeln oder als Gemisch aus mindestens zwei Starterverbindungen eingesetzt.

Ferner können im Prozess als Starter auch vorgefertigte Alkylenoxidadditionsprodukte der erwähnten niedermolekularen Starterverbindungen, also Polyetherpolyole mit OH-Zahlen von 100 bis 1000 mg KOH/g (mit)verwendet werden. Die Herstellung eines solchen vorgefertigten Alkylenoxidadditionsproduktes kann beispielsweise auch *in situ* vor der Zugabe des Fettsäureesters in Schritt (i) durch Zudosierung einer ausreichenden Menge Alkylenoxid zur Starterverbindung (1) erfolgen. Die europäische Patentanmeldeschrift EP 2177555 A2 lehrt, dass eine solche Vorgehensweise sich insbesondere dann als vorteilhaft erweist, wenn in Polyetheresterherstellprozessen Starterverbindungen mit Schmelzpunkten höher als Raumtemperatur eingesetzt werden, da sich der Umsatz solcher fester Starterverbindungen hiermit signifikant verbessern lässt. Auch ist es möglich, im erfindungsgemäßen Prozess neben den Starterverbindungen auch Polyesterpolyole mit OH-Zahlen im Bereich von 6 bis 800 mg KOH/g einzusetzen. Hierfür geeignete Polyesterpolyole können beispielsweise aus organischen Dicarbonsäuren mit 2 bis 12 Kohlenstoffatomen und mehrwertigen Alkoholen, vorzugsweise Diolen, mit 2 bis 12 Kohlenstoffatomen, vorzugsweise 2 bis 6 Kohlenstoffatomen hergestellt werden.

In einer Ausführungsform des erfindungsgemäßen Verfahrens ist die Starterverbindung eine oder mehrere Verbindungen und wird ausgewählt aus der Liste bestehend aus Propylenglykol, Ethylenglykol, Diethylenglykol, Dipropylenglykol, Trimethylolpropan, Glycerin, Triethanolamin, Pentaerythrit, Sorbitol, Saccharose, Ethylendiamin, Hexamethylendiamin, Anilin, den Isomeren des Toluidins, den Isomeren des Diaminotoluols, insbesondere solche mit in ortho-Stellung zueinander positionierten Aminogruppen, den Isomeren des Diaminodiphenylmethans sowie den bei der Kondensation von Anilin mit Formaldehyd zu Diaminodiphenylmethan anfallenden höherkernigen Produkten.

Für das erfindungsgemäßen Verfahrens geeignete Carbonsäureanhydride sind insbesondere cyclische Dicarbonsäureanhydride, ausgewählt aus der Gruppe enthaltend Phthalsäureanhydrid, 1,8-Naphthalindicarbonsäureanhydrid, 1,2,4-Benzoltricarbonsäureanhydrid Maleinsäureanhydrid, Bernsteinsäureanhydrid, Tetrahydrophthalsäureanhydrid sowie Alkenylbernsteinsäureanhydride und Mischungen daraus. Das cyclische Anhydrid einer Dicarbonsäure kann in einer Ausführungsform auch Itaconsäureanhydrid sein.

Die Alkenylbernsteinsäureanhydride können dabei ausgewählt sein aus der Gruppe der C12-C20-alkyl- kettensubstituierten Bernsteinsäureanhydride und der Poly(isobutylen)bernsteinsäureanhydride mit Molmassen zwischen 500 und 2000 g/mol.

In einer Ausführungsform des erfindungsgemäßen Verfahrens ist das cyclische Dicarbonsäureanhydrid (2) ein aromatisches cyclisches Dicarbonsäureanhydrid, wie beispielsweise Phthalsäureanhydrid, 1,8-Naphthalindicarbonsäureanhydrid und 1,2,4-Benzoltricarbonsäureanhydrid. Besonders bevorzugt ist Phthalsäureanhydrid.

Die cyclischen Dicarbonsäureanhydride (2) werden entweder einzeln oder als Gemisch aus mindestens zwei Dicarbonsäureanhydriden eingesetzt.

Der Oberbegriff "Fettsäureester" bezeichnet im Folgenden Fettsäureglyceride, insbesondere Fettsäuretriglyceride, und/oder Fettsäureester auf Basis anderer mono- und mehrfunktioneller Alkohole. Die Fettsäurereste der Fettsäureester können, wie beim Ricinusöl, ihrerseits Hydroxygruppen tragen. Natürlich ist es auch möglich Fettsäureester, deren Fettsäurereste nachträglich mit Hydroxygruppen modifiziert wurden, im erfindungsgemäßen Verfahren einzusetzen. Derart modifizierte Fettsäurereste können beispielsweise durch Epoxidierung der olefinischen Doppelbindungen und anschließende Ringöffnung der Oxiranringe mittels Nucleophilen oder durch Hydroformylierung / Hydrierung erhalten werden. Auch werden ungesättigte Öle zu diesem Zweck häufig bei erhöhter Temperatur mit Luftsauerstoff behandelt.

Alle Triglyceride eignen sich als Substrate für die erfindungsgemäßen Verfahren. Beispielhaft genannt seien Baumwollsaatöl, Erdnussöl, Kokosöl, Leinöl, Palmkernöl, Olivenöl, Maisöl, Palmöl, Rizinusöl, Lesquerellaöl, Rapsöl, Sojaöl, Sonnenblumenöl, Heringsöl, Sardinenöl und Talg. Natürlich können auch Fettsäureester anderer mono- oder mehrfunktioneller Alkohole sowie Fettsäureglyceride mit weniger als 3 Fettsäureresten pro Glycerinmolekül im erfindungsgemäßen Verfahren eingesetzt werden. Die Fettsäure(tri)glyceride und die Fettsäureester anderer mono- und mehrfunktioneller Alkohole können auch im Gemisch eingesetzt werden.

In einer Ausführungsform des erfindungsgemäßen Verfahrens weist der Fettsäureester (3) keine freien Hydroxylgruppen in den Fettsäureresten auf.

In einer Ausführungsform des erfindungsgemäßen Verfahrens ist der Fettsäureester (3) ohne freie Hydroxylgruppen in den Fettsäureresten eine oder mehrere Verbindungen und ist ausgewählt aus der Gruppe bestehend aus Baumwollsaatöl, Erdnussöl, Kokosöl, Leinöl, Palmkernöl, Olivenöl, Maisöl, Palmöl, Jatrophaöl, Rapsöl, Sojaöl, Sonnenblumenöl, Heringsöl, Sardinenöl und Talg, bevorzugt Sojaöl.

Der Fettsäureester (3) wird bei der Herstellung der erfindungsgemäßen Polyoxyalkylenpolyesterpolyole in Mengen von 10 Gew.-% bis 70 Gew.-%, bevorzugt von 10 Gew.-% bis 40 Gew.-%, und besonders bevorzugt von 10 Gew.-% bis 30 Gew.-%, bezogen auf die Summe aller Komponenten, eingesetzt.

Die Fettsäureester (3) werden entweder einzeln oder als Gemisch aus mindestens zwei Starterverbindungen eingesetzt.

Geeignete Alkylenoxide sind beispielsweise Ethylenoxid, Propylenoxid, 1,2-Butylenoxid bzw. 2,3-Butylenoxid und Styroloxid. Bevorzugt werden Propylenoxid und Ethylenoxid dem Reaktionsgemisch einzeln, im Gemisch oder nacheinander zugeführt. Werden die Alkylenoxide nacheinander dosiert, so enthalten die hergestellten Produkte Polyetherketten mit Blockstrukturen. Beispielsweise kann in Schritt (iv) ein anderes Alkylenoxid dosiert werden als in Schritt (ii). Produkte mit Ethylenoxidendblöcken sind in der Regel durch erhöhte Konzentrationen an primären Endgruppen gekennzeichnet, welche den Systemen die für Formschaumanwendungen notwendige Isocyanatreaktivität verleihen. Bevorzugt eingesetzte Alkylenoxide sind Propylenoxid und / oder Ethylenoxid, besonders bevorzugt wird Ethylenoxid verwendet, da letzteres den auf Basis solcher Polyetherester hergestellten Polyurethanwerkstoffen eine erhöhte Flammwidrigkeit verleiht.

In einer Ausführungsform des erfindungsgemäßen Verfahrens entspricht die Summe der Teilmenge (v1) des in Schritt (ii) zugebenenen Alkylenoxids (4) und der Teilmenge (v2) des in Schritt (iv) zugebenenen Alkylenoxids (4) 90 mol-%, bevorzugt 95 mol-% und besonders bevorzugt 100 % der Gesamtmenge (vG) des zugegebenen Alkylenoxids (4).

Die Alkylenoxide (4) werden entweder einzeln oder als Gemisch aus mindestens zwei Alkylenoxiden eingesetzt.

In einer Ausführungsform des erfindungsgemäßen Verfahrens wird der basische Katalysator (5) in Schritt (i) und/oder in Schritt (iii) und/oder in Schritt (iv), bevorzugt in Schritt (i) zugegeben.

In einer Ausführungsform des erfindungsgemäßen Verfahrens wird als basischer Katalysator ein Alkalimetall- oder Erdalkalimetallhydroxid, bevorzugt Kaliumhydroxid, verwendet. Der Katalysator kann dem Reaktionsgemisch in Form wässriger Lösungen oder wasserfrei zugefügt werden. Bevorzugt wird vor der Zugabe der Fettsäureester zum Reaktionsgemisch etwa vorhandenes Lösungswasser oder durch die Deprotonierung der OH-Gruppen entstandenes Wasser entfernt. Die Entwässerung kann beispielsweise durch Tempern unter vermindertem Druck bei Temperaturen von 80 bis 150 °C erfolgen und gegebenenfalls durch Strippen mit Inertgas unterstützt werden. Restwasserspuren können aus dem Reaktionsgemisch vor Zugabe der Fettsäureester schließlich durch Umsetzung mit kleinen Mengen Alkylenoxid entfernt werden. In der Regel reichen hierfür 5 Gew.-% Alkylenoxid, bezogen auf die Gesamtmenge an im Reaktor enthaltener Reaktionsmischung, aus. Die Katalysatorkonzentration beträgt hierbei 0,02 bis 1 Gew.-%, bezogen auf die Endproduktmenge, bevorzugt werden 0,05 bis 0,6 Gew.-% eingesetzt.

In einer alternativen Ausführungsform des erfindungsgemäßen Verfahrens werden als basische Katalysatoren Alkylenoxid-Additionsprodukte hydroxyfunktioneller Starterverbindungen mit Alkoxylatgehalten von 0,05 bis 50 Äquivalenz-% eingesetzt ("polymere Alkoxylate"). Unter Alkoxylatgehalt ist der durch eine Base durch Deprotonierung entfernte Anteil zerewitinoff-aktiver Wasserstoffatome an allen zerewitinoff-aktiven Wasserstoffatomen im Katalysator zu verstehen. Das als Katalysator eingesetzte polymere Alkoxylat kann in einem separaten Reaktionsschritt durch alkalikatalysierte Addition von Alkylenoxiden an die bereits oben erwähnten Starterverbindungen mit zerewitinoff-aktiven Wasserstoffatomen hergestellt werden. Üblicherweise wird bei der Herstellung des polymeren Alkoxylates ein Alkali- oder Erdalkalimetallhydroxid, z. B. KOH, in Mengen von 0,1 bis 1 Gew.-%, bezogen auf die herzustellende Menge, als Katalysator eingesetzt, das Reaktionsgemisch im Vakuum entwässert, die Alkylenoxidadditionsreaktion unter Inertgasatmosphäre bei 100 bis 150°C bis zum Erreichen einer OH-Zahl von 150 bis 1200 mg KOH/g durchgeführt und danach durch Zugabe weiteren Alkali- oder Erdalkalimetallhydroxides und anschließendem Entwässern auf die obengenannten Alkoxylatgehalte von 0,05 bis 50 Äquivalenz-% eingestellt. Solchermaßen hergestellte polymere Alkoxylate können separat unter Inertgasatmosphäre gelagert werden. Sie finden bei der Herstellung langkettiger Polyetherpolyole bereits seit langem Einsatz. Die Menge des im erfindungsgemäßen Verfahren eingesetzten polymeren Alkoxylates wird üblicherweise so bemessen, dass sie einer auf das erfindungsgemäße Endprodukt bezogenen Menge an Alkali- oder Erdalkalimetallhydroxid von 200 ppm bis 1 Gew.-% entspricht. Die polymeren Alkoxylate können natürlich auch als Gemische eingesetzt werden.

Die Herstellung des polymeren Alkoxylates kann auch in situ direkt vor der eigentlichen Durchführung des erfindungsgemäßen Verfahrens im gleichen Reaktor durchgeführt werden. Hierbei wird die für einen Polymerisationsansatz notwendige Menge an polymerem Alkoxylat im Reaktor nach der im vorhergehenden Absatz geschilderten Vorgehensweise hergestellt. Bei dieser Vorgehensweise ist natürlich sicherzustellen, dass die äußerst geringen Startermengen zu Beginn der Reaktion auch gerührt werden können. Dies kann gegebenenfalls durch den Einsatz inerter Lösungsmittel wie Toluol und/oder THF erreicht werden.

In einer weiteren, bevorzugteren Ausführungsform des erfindungsgemäßen Verfahrens werden als basische Katalysatoren Amine, wie aliphatische oder aromatische Amine oder Alkanolamine eingesetzt. Bevorzugt werden aromatische Amine verwendet.

Als Katalysatoren einsetzbare Amine sind beispielsweise aliphatische Amine oder Alkanolamine wie N,N-Dimethylbenzylamin, Dimethylaminoethanol, Dimethylaminopropanol, N-Methyldiethanolamin, Trimethylamin, N,N-Dimethylcyclohexylamin, N-Methylpyrrolidin, N,N,N',N'-tetramethylethylendiamin, Diazabicyclo[2,2,2]octan, 1,4,Dimethylpiperazin oder N-methylmorpholin.

In einer bevorzugten Variante dieser Ausführungsform des erfindungsgemäßen Verfahrens ist das aromatische Amin eine oder mehrere Verbindungen und wird ausgewählt aus der Gruppe bestehend aus Imidazol, 1-Methylimidazol, 2-Methylimidazol, 4(5)-Methylimidazol, 2,4(5)Dimethylimidazol, 1-Ethylimidazol, 2-Ethylimidazol, 1-Phenylimidazol, 2-Phenylimidazol, 4(5)Phenylimidazol, und N,N-dimethylaminopyridin. Eine umfassende Übersicht verwendbarer Amine ist von M. Ionescu et. al. in "Advances in Urethanes Science and Technology", 1998, 14, 151-218 gegeben worden. Bevorzugt werden tertiäre aliphatische Amine oder Alkanolamine eingesetzt sowie Imidazol und die erwähnten Imidazol- bzw. Pyridinderivate. Die Katalysatoren können in auf die Endproduktmenge bezogenen Konzentrationen von 200 ppm bis 10.000 ppm eingesetzt werden, bevorzugt ist der Konzentrationsbereich von 200 ppm bis 5.000 ppm.

In einer weiteren, weniger bevorzugten Ausführungsform des erfindungsgemäßen Verfahrens werden als basische Katalysatoren Carbonsäuresalze von Alkali- oder Erdalkalimetallen eingesetzt. Die zugrundeliegenden Carbonsäuren können ein- oder mehrbasisch sein. Beispiele sind Salze der Essig-, Propion- und Adipinsäure. Solche Alkali- oder Erdalkalicarboxylate werden üblicherweise in Mengen von 0,04 bis 2 Gew.-%, bezogen auf die Endproduktmenge, eingesetzt.

Die Schritte (i), (ii), (iii) und (iv) des erfindungsgemäßen Verfahrens werden im Einzelnen wie nachfolgend beschrieben durchgeführt:

In Schritt (i) des erfindungsgemäßen Verfahrens wird eine Mischung (i) umfassend die Starterverbindung (1) und den Fettsäureester (3) bereitgestellt, wobei die Mischung (i) kein cyclisches Dicarbonsäureanhydrid (2) enthält.

Die Mischung (i) wird durch Rühren oder Umpumpen über ein dispergierend wirkendes Aggregat hergestellt. Mischung (i) ist normalerweise heterogen, da die Starterverbindung (1) und der Fettsäureester (3), insbesondere wenn es sich bei ihm um ein Fettsäuretriglycerid handelt, dessen Fettsäurereste keine freien OH-Gruppen tragen oder wenn vorgefertigte Alkylenoxidadditionsprodukte niedermolekularer Starterverbindungen eingesetzt werden, häufig nicht miteinander verträglich sind. Um die Mischung / Dispergierung der Komponenten zu erleichtern, kann bei erhöhter Temperatur, beispielsweise bei 50 bis 150 °C gerührt bzw. umgepumpt werden. Es ist im Allgemeinen nicht notwendig, eine bestimmte Mindestrühr- bzw. Mindestumpumpzeit einzuhalten.

Im Reaktor wird die Mischung (i) umfassend die Starterverbindung (1), den Fettsäureester (3) und optional den Katalysator (5) vorgelegt und unter Inertgasatmosphäre bei Temperaturen von 80 - 170 °C, bevorzugt 100 - 150 °C (80 - 150 °C bei Verwendung von Aminkatalysatoren) mit der Teilmenge (v1) des Alkylenoxids (4) zur Reaktion gebracht. Diese Alkylenoxidteilmenge (v1) beträgt mindestens 0,15 mol Alkylenoxid (4) pro 1 mol zerewitinoff-aktiver Wasserstoffatome der Starterverbindung (1). Um die Anwesenheit von Wasser mit Sicherheit auszuschließen, kann vor der Zugabe des Fettsäureesters (3) noch im Vakuum bei Temperaturen von 80 - 150 °C (40 - 130 °C bei Verwendung von Aminkatalysatoren), gegebenenfalls durch zusätzliches Strippen mit Inertgas, entwässert werden. Werden Amine als Katalysatoren verwendet, können diese auch erst nach einem solchen Entwässerungsschritt zugesetzt werden. Das Alkylenoxid (4) wird in der gängigen Weise dem Reaktor kontinuierlich derart zugeführt, dass die sicherheitstechnischen Druckgrenzen des verwendeten Reaktorsystems nicht überschritten werden. Üblicherweise werden solche Reaktionen im Druckbereich von 10 mbar bis 10 bar durchgeführt. Insbesondere ist bei der Dosierung von ethylenoxidhaltigen Alkylenoxidgemischen oder reinem Ethylenoxid darauf zu achten, dass ein ausreichender Inertgaspartialdruck im Reaktor während der Anfahr- und Dosierphase aufrechterhalten wird. Dieser kann beispielsweise durch Edelgase oder Stickstoff eingestellt werden. Die Alkylenoxide (4) können dem Reaktor auf unterschiedliche Weise zugeführt werden: Möglich ist eine Dosierung in die Gasphase oder direkt in die Flüssigphase, z. B. über ein Tauchrohr oder einen in der Nähe des Reaktorbodens in einer gut durchmischten Zone befindlichen Verteilerring. Bei Dosierung in die Flüssigphase sollten die Dosieraggregate selbstleerend ausgelegt sein, beispielsweise durch Anbringen der Dosierbohrungen an der Unterseite des Verteilerrings. Vorteilhafterweise kann durch apparative Maßnahmen, beispielsweise durch die Montage von Rückschlagklappen, ein Rückströmen von Reaktionsmedium in die alkylenoxidführenden Leitungen und Dosieraggregate bzw. in die Alkylenoxid-Vorratsbehälter verhindert werden. Vorzugsweise erfolgt die Umsetzung der Alkylenoxidteilmenge (v1) mit der Mischung (i) bei einer Temperatur von 70 bis 170 °C, besonders bevorzugt bei einer Temperatur von 100 bis 150 °C. Die Temperatur kann während der Alkylenoxiddosierphase innerhalb der beschriebenen Grenzen variiert werden: Um eine optimale Abstimmung zwischen hohem Alkylenoxidumsatz und geringer Nebenproduktbildung bei Verwendung empfindlicher Starterverbindungen (wie beispielsweise Saccharose) zu erreichen, kann zunächst bei niedrigen Reaktionstemperaturen (beispielsweise bei 70 bis 110 °C) alkoxyliert werden, und erst bei hinreichendem Starterumsatz (d. h. sobald mindestens 50 Gew.-% der eingesetzten Starterverbindungen (1) an mindestens einem Zerewitinoff-aktiven Wasserstoffatom mit Alkylenoxid reagiert haben) zu höheren Reaktionstemperaturen (beispielsweise auf 110 bis 130 °C) übergegangen werden. Nach Ende der Dosierphase für die Alkylenoxidteilmenge (v1) schließt sich üblicherweise eine Nachreaktionsphase an, in der restliches Alkylenoxid abreagiert. Nachreaktionen können gegebenenfalls bei höheren Temperaturen (d.h. nach Anhebung der Temperatur auf 100 bis 170 °C, bevorzugt 100 bis 150 °C) durchgeführt werden. Das Ende einer solchen Nachreaktionsphase ist erreicht, wenn kein weiterer oder nur noch ein sehr langsamer Druckabfall im Reaktionskessel feststellbar ist.

Die Temperatur der exothermen Alkylenoxidadditionsreaktion wird durch Kühlung auf dem gewünschten Niveau gehalten. Gemäß dem Stand der Technik zur Auslegung von Polymerisationsreaktoren für exotherme Reaktionen (z. B. Ullmann's Encyclopedia of Industrial Chemistry, Band B4, Seite 167ff, 5. Ausgabe, 1992) erfolgt eine solche Kühlung im Allgemeinen über die Reaktorwand (z. B. Doppelmantel, Halbrohrschlange) sowie mittels weiterer intern im Reaktor und/oder extern im Umpumpkreislauf angeordneter Wärmetauscherflächen, z.B. an Kühlschlangen, Kühlkerzen, Platten-Rohrbündel- oder Mischerwärmetauschern. Diese sollten vorteilhafterweise so ausgelegt sein, dass auch zu Beginn der Dosierphase, d. h. bei kleinem Füllstand und / oder in Gegenwart eines möglicherweise heterogenen Reaktorinhalts (beispielsweise bei Vorliegen von Feststoffdispersionen oder Suspensionen) effektiv gekühlt werden kann.

Dem aus Schritt (ii) resultierenden Reaktionsgemisch wird nun das cyclische Dicarbonsäureanhydrid (2) zugeführt. Üblicherweise werden hierbei 0,05 bis 1 mol cyclisches Dicarbonsäureanhydrid (2) pro 1 mol der über die Starterverbindung (1) eingebrachten zerewitinoff-aktiven Wasserstoffatome eingesetzt. Es ist vorteilhaft, solche häufig als Feststoffe vorliegenden cyclischen Dicarbonsäureanhydride (2) dem Reaktionsgemisch als Schmelze zuzuführen. Bei den üblichen Reaktionstemperaturen von 70 °C bis 170 °C findet die Bildung der Halbester der den cyclischen Dicarbonsäureanhydriden (2) zugrundeliegenden Dicarbonsäuren durch Reaktion der cyclischen Dicarbonsäureanhydride mit der Starterverbindung (1) sehr schnell statt, siehe auch beispielsweise DE 3916340, so dass auf eine separate Wartezeit bis zur Vervollständigung der Halbesterbildung in der Regel verzichtet werden kann. Es empfiehlt sich vielmehr, nach Dosierung des cyclischen Dicarbonsäureanhydrids (2) zügig mit Schritt (iv) forzufahren, um eintretende Veresterungsprozesse weitestgehend zu unterdrücken.

In Schritt (iv) des erfindungsgemäßen Verfahrens wird die aus Schritt (iii) erhaltene Verbindung (iii) unter Inertgasatmosphäre bei Temperaturen von 80 - 170 °C, bevorzugt 100 - 150 °C (80 - 150 °C in Gegenwart des Katalysators (5), bevorzugt in Gegenwart von Aminkatalysatoren, mit der Teilmenge (v2) des Alkylenoxids (4) zur Reaktion gebracht. Die Alkylenoxidteilmenge (v2) beträgt mindestens 1,15 mol pro 1 mol des in Schritt (iii) zugegebenen cyclischen Dicarbonsäureanhydrids (2). Die empfohlenen Reaktionsbedingungen und apparatetechnischen Parameter entsprechen denen, die bereits für Schritt (ii) beschrieben worden sind. Auch Schritt (iv) schließt in der Regel mit einem Nachreaktionsschritt ab, dieser kann ebenfalls bei höheren Temperaturen (d.h. nach Anhebung der Temperatur auf 100 bis 170 °C, bevorzugt 100 bis 150 °C) durchgeführt werden. Das Ende einer solchen Nachreaktionsphase ist erreicht, wenn kein weiterer oder nur noch ein sehr langsamer Druckabfall im Reaktionskessel feststellbar ist. Werden langkettige Polyoxyalkylenpolyetheresterpolyole hergestellt, beispielsweise solche mit OH-Zahlen unter 100 mg KOH / g und werden hierfür starke Basen, wie beispielsweise Alkalimetallhydroxide, als Katalysatoren eingesetzt, wird empfohlen, die Nachreaktionsphase bei erhöhter Temperatur oder bei Reaktionstemperatur nicht länger als unbedingt notwendig andauern zu lassen. Wird beispielsweise eine als Endpunktkriterium für die Nachreaktionsdauer festgelegte Druckabfallrate erreicht oder unterschritten, sollte die Temperatur auf Werte unter 100 °C, bevorzugt auf Werte unter 80 °C abgesenkt werden, um die Bildung unerwünschter Nebenkomponenten zu unterdrücken. Fällt die Druckabfallrate auf einen Wert von 20 mbar / h oder darunter, kann in der Regel die Nachreaktionsphase als beendet angesehen werden.

In einer Ausführungsform des erfindungsgemäßen Verfahrens wird der basische Kataysator (5) in Schritt (i) und/oder in Schritt (iii) und/oder in Schritt (iv) zugegeben. Er wird bevorzugt in Schritt (i) zugegeben.

Das aus Schritt (iv) resultierende rohe Polyoxyalkylenpolyetheresterpolyol kann optional Aufarbeitungsschritten unterzogen werden, um etwaige Katalysatorspuren zu entfernen. Im Falle von mit Aminen katalysierten Alkylenoxidadditionsreaktionen sind solche Nachbehandlungsschritte im Allgemeinen nicht erforderlich. Die optionale Entfernung des Katalysators aus dem aus Schritt (iv) resultierenden rohen Polyoxyalkylenpolyetheresterpolyol kann auf verschiedene Weise erfolgen: Beispielsweise kann der basische Katalysator, beispielsweise KOH, mit verdünnten Mineralsäuren wie Schwefelsäure oder Phosphorsäure neutralisiert werden. Wird unter Verwendung starker verdünnter Mineralsäuren (pKa der 1. Dissoziationsstufe < 2,8) neutralisiert, sollte die Neutralisation bei verhältnismäßig tiefen Temperaturen, beispielsweise bei 20 bis 80 °C, bevorzugt bei 20 - 60 °C, durchgeführt werden und die zur Neutralisation notwendige Säuremenge dem alkalischen Alkylenoxidadditionsprodukt möglichst schnell zugeführt werden, so dass die basischen Reaktionsprodukte gleichzeitig hydrolysiert und neutralisiert werden. Es empfiehlt sich also, auf einen separaten Hydrolyseschritt vor Zugabe der Neutralisationssäure zu verzichten. Mit einer solchen Vorgehensweise werden Nebenreaktionen an den Esterbindungen der Polyoxyalkylenpolyetheresterpolyole weitestgehend ausgeschlossen. Die bei der Neutralisation entstehenden Salze werden abgetrennt, beispielsweise durch Filtration. Ausnahmen bilden die in EP-A 2028211 und WO-A 2009106244 beschriebenen Polyetherpolyolherstellverfahren. Alternativ kann die Neutralisation mit Hydroxycarbonsäuren (wie beispielsweise Milchsäure, wie in WO-A 9820061 und US-A 2004167316 beschrieben) erfolgen. Ebenso geeignet zur Neutralisation sind Carbonsäuren wie beispielsweise Ameisensäure (vgl. US 4,521,548) oder auch Adipinsäure. Um eine für die angestrebte Anwendung ausreichend hohe Protonenkonzentration im Polyoxyalkylenpolyetheresterpolyol zu erreichen, werden (Hydroxy)Carbonsäuren häufig in zur zu neutralisierenden Menge an basischem Katalysator deutlich überschüssiger Menge eingesetzt. Die nach Neutralisation mit manchen Carbonsäuren (wie beispielsweise Hydroxycarbonsäuren oder Ameisensäure) entstehenden Metallcarboxylate sind in den Polyoxyalkylenpolyetheresterpolyolen klar löslich, so dass die Abtrennung der Salze hier entfallen kann. Die Neutralisation kann beispielsweise auch durch Zugabe von cyclischen Dicarbonsäureanhydriden, wie Phthalsäureanhydrid, Maleinsäureanhydrid, Tetrahydrophthalsäureanhydrid oder Bernsteinsäureanhydrid erfolgen, wobei ebenfalls in den erfindungsgemäßen Polyoxyalkylenpolyetheresterpolyolen lösliche Salze erhalten werden. Desgleichen ist die Verwendung von Ringöffnungsprodukten cyclischer Carbonsäureanhydride mit Polyolen, also von Dicarbonsäurehalbestern, als Neutralisationsagenzien möglich. Schließlich sei noch darauf hingewiesen, dass sich die unvollständig alkoxylierten Oxosäuren des Phosphors ebenfalls als Neutralisationssäuren eignen. Ebenfalls möglich ist zur Entfernung des Katalysators der Einsatz von sauren Kationenaustauschern, wie beispielsweise in DE-A 100 24 313 beschrieben. Des Weiteren können die Katalysatoren mittels Adsorbentien wie beispielsweise Schichtsilikaten (Bentonit, Attapulgit), Diatomeenerde oder auch synthetischen Magnesiumsilikaten (wie AMBOSOL® oder BriteSorb®) abgetrennt werden. Solche Aufreinigungsverfahren sind beschrieben in RO 118433, US 4,507,475, EP-A 0693513 und EP-A 1751213. Phasentrennverfahren stellen im Prinzip eine weitere Möglichkeit zur Abtrennung von Katalysatorresten dar, jedoch sind im Allgemeinen die Wasserlöslichkeiten der Polyoxyalkylenpolyetheresterpolyole für eine effektive Durchführung von Phasentrennverfahren zu hoch. Phasentrennverfahren sind beispielsweise beschrieben in WO-A 0114456, JP-A 6-157743, WO-A 9620972 und US-A 3823145.

Den erfindungsgemäßen Polyoxyalkylenpolyetheresterpolyolen können Antioxidanzmittel (z. B. auf Basis von Phenolderivaten und / oder auf Basis von aromatischen Aminen) zugesetzt werden. Wird ein Alkalimethallhydroxid zur Katalyse der Alkylenoxidaddition an die eingesetzten Starterverbindungen verwendet, so empfiehlt es sich, solche Antioxidanzmittel erst nach Neutralisierung bzw. Abtrennung dieser Katalysatorspuren zuzusetzen, da auf diese Weise weniger stark verfärbte Polyoxyalkylenpolyetheresterpolyole erhalten werden können.

In einer Ausführungsform des erfindungsgemäßen Verfahrens beträgt der eingebrachte Leistungseintrag zwischen 0,8 und 5 W/l, bevorzugt zwischen 0,8 und 3 W/l, bezogen auf das Flüssigkeitsvolumen nach Beendigung von Schritt (iv), d.h. nach Abschluss der Dosierung aller Edukte.

Generell sollte in allen Reaktionsphasen durch Auslegung und Einsatz handelsüblicher Rührorgane für eine gute Durchmischung des Reaktorinhaltes gesorgt werden, wobei hier insbesondere ein- oder mehrstufig angeordnete Rührer oder großflächig über die Füllhöhe wirkende Rührertypen geeignet sind (siehe z. B. Handbuch Apparate; Vulkan-Verlag Essen, 1. Aufl. (1990), S.188 - 208). Technisch besonders relevant ist hierbei eine im Mittel über den gesamten Reaktorinhalt eingetragene Mischleistung, die am Ende der Dosierung aller Edukte im Bereich von 0,8 bis 5 W / 1, bevorzugt im Bereich von 0,8 und 3 W / 1 liegt, mit entsprechend höheren lokalen Leistungseinträgen im Bereich der Rührorgane selbst und ggf. bei niedrigeren Füllständen. Um eine optimale Rührwirkung zu erzielen, können im Reaktor gemäß allgemeinem Stand der Technik Kombinationen aus Stromstörern (z. B. Flach- oder Rohrstromstörer) und Kühlschlangen (oder Kühlkerzen) angeordnet werden, die sich auch über den Behälterboden erstrecken können. Die Rührleistung des Mischaggregates kann während der Dosierphase auch füllstandsabhängig variiert werden, um in kritischen Reaktionsphasen einen besonders hohen Energieeintrag zu gewährleisten. Beispielsweise kann es vorteilhaft sein, feststoffhaltige Dispersionen, die zu Reaktionsbeginn beispielsweise bei der Verwendung von Saccharose vorliegen können, besonders intensiv zu durchmischen. Außerdem sollte insbesondere beim Einsatz fester H-funktioneller Starterverbindungen durch die Wahl des Rühraggregates sichergestellt werden, dass eine ausreichende Dispergierung des Feststoffes im Reaktionsgemisch gewährleistet ist. Bevorzugt werden hier bodengängige Rührstufen sowie besonders zur Suspendierung geeignete Rührorgane eingesetzt. Ferner sollte die Rührergeometrie zur Minderung des Aufschäumens von Reaktionsprodukten beitragen. Das Aufschäumen von Reaktionsgemischen kann beispielsweise nach Ende von Dosier- und Nachreaktionsphasen beobachtet werden, wenn Restalkylenoxide zusätzlich im Vakuum bei absoluten Drücken im Bereich von 1 bis 500 mbar entfernt werden. Für solche Fälle haben sich Rührorgane als geeignet herausgestellt, die eine kontinuierliche Durchmischung der Flüssigkeitsoberfläche erzielen. Je nach Anforderung weist die Rührwelle ein Bodenlager und gegebenenfalls weitere Stützlager im Behälter auf. Der Antrieb der Rührerwelle kann dabei von oben oder unten erfolgen (mit zentrischer oder exzentrischer Anordnung der Welle).

Alternativ ist es auch möglich, die notwendige Durchmischung und den erforderlichen Mischleistungseintrag ausschließlich über einen über einen Wärmetauscher geführten Umpumpkreislauf zu erzielen oder diesen zusätzlich zum Rühraggregat als weitere Mischkomponente zu betreiben, wobei der Reaktorinhalt nach Bedarf (typischerweise 1 bis 50 mal pro Stunde) umgepumpt wird. Die mittels Umpumpung, beispielsweise über einen außenliegenden Wärmetauscher über diesen oder bei Rückführung in den Reaktor über eine Düse oder Injektor, eingetragene spezifische Mischleistung beläuft sich ebenfalls auf Werte von im Mittel 0,8 bis 5 W / 1, bevorzugt 0,8 bis 3 W / 1 wobei diese auf das im Reaktor und den Umpumpkreislauf nach Abschluss der Dosierung aller Edukte befindliche Flüssigkeitsvolumen bezogen ist.

Es wird empfohlen, nicht nur die Herstellung der erfindungsgemäßen Polyoxyalkylenpolyesterpolyole unter Sauerstoffausschluss durchzuführen, sondern auch fertig aufgearbeitete, salzfreie und durch Antioxidanzzugabe stabilisierte erfindungsgemäße Polyoxyalkylenpolyesterpolyole unter Sauerstoffausschluss zu handhaben und zu lagern. Hierfür geeignete Inertgase sind beispielsweise Edelgase, oder Stickstoff oder Kohlendioxid, besonders geeignet sind Edelgase oder Stickstoff. Durch die Unterbindung von Sauerstoffzutritt lassen sich weitere Produktverfärbungen weitestgehend vermeiden, dies gilt insbesondere bei erhöhten Temperaturen, die im Allgemeinen genutzt werden um durch Senkung der Produktviskosität die Handhabung der Fertigprodukte zu erleichtern. Darüber hinaus entstehen unter Inertgasatmosphäre auch deutlich weniger Peroxidgruppen, die unter Spaltung vorhandener Polyetherbindungen zur Bildung weiterer niedermolekularer oxidativer Abbauprodukte wie beispielsweise Acetaldehyd, Methanol, Ameisensäure, Ameisensäureester, Aceton und Formaldehyd beitragen. Somit können während der Lagerung der Fertigprodukte Qualitätsminderungen minimiert, der Gehalt an leichtflüchtigen organischen Verbindungen gesenkt und Geruchsbelästigungen sowie gesundheitliche Beeinträchtigungen vermieden werden.

Ein weiterer Gegenstand der Erfindung sind Polyoxyalkylenpolyesterpolyole erhältlich nach dem erfindungsgemäßen Verfahren.

In einer Ausführungsform weist das resultierende Polyoxyalkylenpolyesterpolyol eine OH-Zahl zwischen 100 und 300 mg KOH / g auf, wobei die OH-Zahl gemäß der Vorschrift der DIN 53240 bestimmt wird.

Die zahlenmittlere OH-Funktionalität der nach dem erfindungsgemäßen Verfahren erhältlichen Polyoxyalkylenpolyesterpolyole beträgt bevorzugt mindestens 1,8 besonders bevorzugt 1,8 bis 3, wobei die zahlenmittlere Funktionalität $F_n$ gemäß folgender Formel (1) berechnet wird,

$$Fn = \frac{\sum_{i=1}^{i=n}(f_i \cdot m_i) + \sum_{j=1}^{j=m}(f_j \cdot m_j)}{\sum_{i=1}^{i=n} mi + \sum_{j=1}^{j=m} mj} \qquad (1)$$

worin $f_i$ die H-Funktionalität der H-funktionellen Starterverbindung i und m; die eingesetzte Molzahl an H-funktioneller Starterverbindung i sowie $f_j$ die H-Funktionalität des Fettsäureesters j und $m_j$ die Molzahl an eingesetztem Fettsäureester j bedeuten. Beispielsweise trägt Sojaöl keine Fettsäurereste mit OH-Gruppen, somit ist $f_{Sojaöl}$ = 0. Ricinusöl hingegen besitzt eine OH-Funktionalität von im Mittel 2,7, somit ist $f_{Ricinusöl}$ = 2,7.

In einer Ausführungsform weist das resultierende Polyoxyalkylenpolyesterpolyol eine nach der Gardner-Methode gemessene Farbzahl von 2,0 bis 8,0, bevorzugt von 3,0 bis 7,5 auf, wobei die mittels der Gardner-Methode gemessenen Farbzahlen nach der im Experimentalteil angegebenen Vorgehensweise bestimmt werden.

Ein weiterer Gegenstand der vorliegenden Erfindung ist ein Verfahren zur Herstellung von Polyurethanen durch Umsetzung des erfindungsgemäß hergestellten Polyoxyalkylenpolyesterpolyols mit einem Polyisocyanat. Die Polyoxyalkylenpolyesterpolyole können als Ausgangskomponenten für die Herstellung von massiven oder geschäumten Polyurethanwerkstoffen wie beispielsweise von Beschichtungen oder Hartschaumstoffen zu Isolierzwecken sowie von Polyurethanelastomeren eingesetzt werden. Die Polyurethanwerkstoffe und -elastomere können auch Isocyanurat-, Allophanat- und Biuretstruktureinheiten enthalten

Zur Herstellung der geschäumten oder massiven Polyurethanwerkstoffe werden die erfindungsgemäßen Polyoxyalkylenpolyesterpolyole gegebenenfalls mit weiteren isocyanatreaktiven Komponenten gemischt und mit organischen Polyisocyanaten, gegebenenfalls in Gegenwart von Treibmitteln, in Gegenwart von Katalysatoren und gegebenenfalls in Gegenwart anderer Zusatzstoffe wie z. B. Zellstabilisatoren zur Reaktion gebracht.

Als weitere isocyanatreaktive Komponenten können den erfindungsgemäßen Polyoxyalkylenpolyesterpolyolen gegebenenfalls Polyetherpolyole, Polyesterpolyole, Polycarbonatpolyole, Polyethercarbonatpolyole, Polyestercarbonatpolyole, Polyetherestercarbonatpolyole und/oder niedermolekulare Kettenverlängerungs- und/oder Vernetzungsmittel mit OH-Zahlen bzw. NH-Zahlen von 6 bis 1870 mg KOH/g beigemischt werden.

Hierfür geeignete Polyetherpolyole können beispielsweise durch anionische Polymerisation von Alkylenoxiden in Gegenwart von Alkalihydroxiden oder Alkalialkoholaten als Katalysatoren und unter Zusatz mindestens eines Startermoleküls, das 2 bis 8 zerewitinoff-aktive Wasserstoffatome gebunden enthält, oder durch kationische Polymerisation von Alkylenoxiden in Gegenwart von Lewis-Säuren wie Antimonpentachlorid, Bortrifluorid-Etherat oder Tris(pentafluorophenyl)boran erhalten werden. Geeignete Katalysatoren sind natürlich auch solche vom Doppelmetallcyanidkomplextyp, sog. DMC-Katalysatoren, wie sie beispielsweise in US-A 3 404 109, US-A 3 829 505, US-A 3 941 849, US-A 5 158 922, USA 5 470 813, EP-A 700 949, EP-A 743 093, EP-A 761 708, WO 97/40086, WO 98/16310 und WO 00/47649 beschrieben sind. Geeignete Alkylenoxide sowie einige geeignete Starterverbindungen sind in vorangegangenen Abschnitten bereits beschrieben worden. Ergänzend zu erwähnen sind Tetrahydrofuran als lewis-sauer polymerisierbarer cyclischer Ether und Wasser als Startermolekül. Die Polyetherpolyole, vorzugsweise Polyoxypropylen-polyoxyethylenpolyole, besitzen vorzugsweise zahlenmittlere Molmassen von 200 bis 8000 Da. Als Polyetherpolyole eignen sich ferner polymermodifizierte Polyetherpolyole, vorzugsweise Pfropfpolyetherpolyole, insbesondere solche auf Styrol- und/oder Acrylnitrilbasis, die durch *in situ* Polymerisation von Acrylnitril, Styrol oder vorzugsweise Mischungen aus Styrol und Acrylnitril, z.B. im Gewichtsverhältnis 90:10 bis 10:90, vorzugsweise 70:30 bis 30:70, zweckmäßigerweise in den vorgenannten Polyetherpolyolen hergestellt werden, sowie Polyetherpolyol-Dispersionen, die als disperse Phase, üblicherweise in einer Menge von 1 bis 50 Gew.-%, vorzugsweise 2 bis 25 Gew.-%, anorganische Füllstoffe, Polyharnstoffe, Polyhydrazide, tert.-Aminogruppen gebunden enthaltende Polyurethane und/oder Melamin enthalten.

Geeignete Polyesterpolyole können beispielsweise aus organischen Dicarbonsäuren mit 2 bis 12 Kohlenstoffatomen und mehrwertigen Alkoholen, vorzugsweise Diolen, mit 2 bis 12 Kohlenstoffatomen, vorzugsweise 2 bis 6 Kohlenstoffatomen hergestellt werden. Als Dicarbonsäuren kommen beispielsweise in Betracht: Bernsteinsäure, Glutarsäure, Adipinsäure, Korksäure, Azelainsäure, Sebacinsäure, Decandicarbonsäure, Dodecandicarbonsäure, Maleinsäure, Fumarsäure, Phthalsäure, Isophthalsäure und Terephthalsäure. Die Dicarbonsäuren können dabei sowohl einzeln als auch im Gemisch untereinander verwendet werden. Anstelle der freien Dicarbonsäuren können auch die entsprechenden Dicarbonsäurederivate, wie z. B. Dicarbonsäure-mono und/oder -diester von Alkoholen mit 1 bis 4 Kohlenstoffatomen oder Dicarbonsäureanhydride eingesetzt werden. Vorzugsweise verwendet werden Dicarbonsäuregemische aus Bernstein-, Glutar- und Adipinsäure in Mengenverhältnissen von beispielsweise 20 bis 35 / 40 bis 60 / 20 bis 36 Gew.-Teilen und insbesondere Adipinsäure. Beispiele für zwei- und mehrwertige Alkohole sind Ethandiol, Diethylenglykol, 1,2- bzw. 1,3-Propandiol, Dipropylenglykol, Methyl-1,3-Propandiol, 1,4-Butandiol, 1,5-Pentandiol, 3-Methyl-1,5-pentandiol, 1,6-Hexandiol, Neopentylglykol, 1,10-Decandiol, 1,12-Dodecandiol, Glycerin, Trimethylolpropan und Pentaerythrit. Vorzugsweise verwendet werden 1,2-Ethandiol, Diethylenglykol, 1,4-Butandiol, 1,6-Hexandiol, Glycerin, Trimethylolpropan oder Mischungen aus mindestens zwei der genannten mehrwertigen Alkohole, insbesondere Mischungen aus Ethandiol, 1,4-Butandiol und 1,6-Hexandiol, Glycerin und/oder Trimethylolpropan. Eingesetzt werden können ferner Polyesterpolyole aus Lactonen z.B. ε-Caprolacton oder Hydroxycarbonsäuren, z. B. Hydroxycapronsäure und Hydroxyessigsäure.

Zur Herstellung der Polyesterpolyole können die organischen, aromatischen oder aliphatischen Polycarbonsäuren und/oder Polycarbonsäurederivate und mehrwertigen Alkohole katalysatorfrei oder in Gegenwart von Veresterungskatalysatoren, zweckmäßigerweise in einer Atmosphäre aus Inertgasen, wie z.B. Stickstoff, Helium oder Argon und auch in der Schmelze bei Temperaturen von 150 bis 300 °C, vorzugsweise 180 bis 230 °C gegebenenfalls unter vermindertem Druck bis zu den gewünschten Säure- und OH-Zahlen, polykondensiert werden. Die Säurezahl solcher Polyesterpolyole ist vorteilhafterweise kleiner als 10, vorzugsweise kleiner als 2,5 mg KOH / g.

Nach einem bevorzugten Herstellverfahren wird das Veresterungsgemisch bei den oben genannten Temperaturen bis zu einer Säurezahl von 80 bis 30 mg KOH / g, vorzugsweise 40 bis 30 mg KOH / g, unter Normaldruck und anschließend unter einem Druck von kleiner als 500 mbar, vorzugsweise 1 bis 150 mbar, polykondensiert. Als Veresterungskatalysatoren kommen beispielsweise Eisen-, Cadmium-, Kobalt-, Blei-, Zink-, Antimon-, Magnesium-, Titan- und Zinnkatalysatoren in Form von Metallen, Metalloxiden oder Metallsalzen in Betracht. Die Polykondensation von aromatischen oder aliphatischen Carbonsäuren mit mehrwertigen Alkoholen kann jedoch auch in flüssiger Phase in Gegenwart von Verdünnungs- und/oder Schleppmitteln, wie z.B. Benzol, Toluol, Xylol oder Chlorbenzol, zur azeotropen Abdestillation des Kondensationswassers durchgeführt werden.

Das zum Erhalt einer gewünschten OH-Zahl, Funktionalität und Viskosität zu wählende Verhältnis von Dicarbonsäure(derivat) und mehrwertigem Alkohol und die zu wählende Alkoholfunktionalität kann vom Fachmann in einfacher Weise ermittelt werden.

Geeignete Polycarbonatpolyole sind solche der an sich bekannten Art, die beispielsweise durch Umsetzung von Diolen, wie 1,2-Propandiol, 1,4-Butandiol, 1,6-Hexandiol, Diethylenglykol, Triethylenglykol, Tetraethylenglykol oligo-Tetramethylenglykol und/oder oligo-Hexamethylenglykol mit Diarylcarbonaten und/oder Dialkylcarbonaten, z. B. Diphenylcarbonat, Dimethylcarbonat sowie α-ω-Bischloroformiaten oder Phosgen hergestellt werden können. Die ebenfalls geeigneten Polyethercarbonatpolyole werden durch Copolymerisation cyclischer Epoxide und Kohlendioxid erhalten, vorzugsweise werden solche Copolymerisationen unter hohem Druck durchgeführt und durch DMC-Verbindungen katalysiert. Niedermolekulare difunktionelle Kettenverlängerungsmittel und/oder niedermolekulare, vorzugsweise tri- oder tetrafunktionelle Vernetzungsmittel können den erfindungsgemäß einzusetzenden Polyoxyalkylenpolyesterpolyolen zur Modifizierung der mechanischen Eigenschaften, insbesondere der Härte der PUR-Werkstoffe beigemischt werden. Geeignete Kettenverlängerungsmittel wie Alkandiole, Dialkylenglykole und Polyalkylenpolyole und Vernetzungsmittel, z.B. 3- oder 4-wertige Alkohole und oligomere Polyalkylen-polyole mit einer Funktionalität von 3 bis 4, besitzen üblicherweise Molekulargewichte < 800, vorzugsweise von 18 bis 400 und insbesondere von 60 bis 300 Da. Als Kettenverlängerungsmittel vorzugsweise verwendet werden Alkandiole mit 2 bis 12 Kohlenstoffatomen, z.B. Ethandiol, 1,3-Propandiol, 1,5-Pentandiol, 1,6-Hexandiol, 1,7-Heptandiol, 1,8-Octandiol, 1,9-Nonandiol, 1,10-Decandiol und insbesondere 1,4-Butandiol und Dialkylenglykole mit 4 bis 8 Kohlenstoffatomen, z. B. Diethylengykol und Dipropylengykol sowie Polyoxyalkylenglykole. Geeignet sind auch verzweigtkettige und/oder ungesättigte Alkandiole mit üblicherweise nicht mehr als 12 Kohlenstoffatomen, wie z. B. 1,2-Propandiol, 2-Methyl-1,3-Propandiol, 3-Methyl-1,5-pentandiol, 2,2-Dimethyl-1,3-propandiol, 2-Butyl-2-ethyl-1,3-propandiol, 2-Buten-1,4-diol und 2-Butin-1,4-diol, Diester der Terephthalsäure mit Glykolen mit 2 bis 4 Kohlenstoffatomen, wie z.B. Terephthalsäure-bis-ethylenglykolester oder Terephthalsäure-bis-1,4-butylenglykolester und Hydroxyalkylenether des Hydrochinons oder Resorcins, z.B. 1,4-Di-((3-hydroxyethyl)-hydrochinon oder 1,3-(ß-Hydroxyethyl)-resorcin. Auch können Alkanolamine mit 2 bis 12 Kohlenstoffatomen wie Ethanolamin, 2-Aminopropanol und 3-Amino-2,2-dimethylpropanol, N-Alkyldialkanolamine, z.B. N-Methyl- und N-Ethyl-diethanolamin, (cyclo)aliphatische Diamine mit 2 bis 15 Kohlenstoffatomen, wie 1,2-Ethylendiamin, 1,3-Propylendiamin, 1,4-Butylendiamin und 1,6-Hexamethylendiamin, Isophorondiamin, 1,4-Cyclohexamethylendiamin und 4,4'-Diaminodicyclohexylmethan, N-Alkyl-, N,N'-dialkylsubstituierte und aromatische Diamine, die auch am aromatischen Rest durch Alkylgruppen substituiert sein können, mit 1 bis 20, vorzugsweise 1 bis 4 Kohlenstoffatomen im N-Alkylrest, wie N,N'-Diethyl-, N,N'-Disec.-pentyl-, N,N'-Di-sec.-hexyl-, N,N'-Di-sec.-decyl- und N,N'-Dicyclohexyl-, p- bzw. m-Phenylendiamin, N,N'-Dimethyl-, N,N'-Diethyl-, N,N'-Diisopropyl-, N,N'-Di-sec.butyl-, N,N'-Dicyclohexyl-4,4'-diamino-diphenylmethan, N,N'-Disec.-butylbenzidin, Methylen-bis(4-amino-3-benzoe-säuremethylester), 2,4-Chlor-4,4'-diamino-diphenylmethan, 2,4- und 2,6-Toluylendiamin verwendet werden. Geeignete Vernetzungsmittel sind beispielsweise Glycerin, Trimethylolpropan oder Pentaerythrit.

Verwendbar sind auch Gemische unterschiedlicher Kettenverlängerungs- und Vernetzungsmittel untereinander sowie Gemische aus Kettenverlängerungs- und Vernetzungsmitteln.

Geeignete organische Polyisocyanate sind cycloaliphatische, araliphatische, aromatische und heterocyclische Polyisocyanate, wie sie z.B. von W. Siefken in Justus Liebigs Annalen der Chemie, 562, Seiten 75 bis 136, beschrieben werden, beispielsweise solche der Formel $Q(NCO)_n$ in der n = 2-4, vorzugsweise 2, und Q einen aliphatischen Kohlenwasserstoffrest mit 2-18, vorzugsweise 6-10 C-Atomen, einen cycloaliphatischen Kohlenwasserstoffrest mit 4-15, vorzugsweise 5-10 C-Atomen, einen aromatischen Kohlenwasserstoffrest mit 6-15, vorzugsweise 6-13 C-Atomen, oder einen aralipliatischen Kohlenwasserstoffrest mit 8-15, vorzugsweise 8-13 C-Atomen, bedeuten. Geeignet sind z.B. Ethylendiisocyanat, 1,4-Tetramethylendiisocyanat, 1,6-Hexamethylendiisocyanat (HDI), 1,12-Dodecandiisocyanat, Cyclobutan-1,3-diisocyanat, Cyclohexan-1,3- und -1,4-diisocyanat sowie beliebige Gemische dieser Isomeren, 1-Isocyanato-3,3,5-tri-methyl-5-isocyanatomethyl-cyclohexan (DE-B 1 202 785, US-A 3 401 190), 2,4- und 2,6-Hexahydrotoluylendiisocyanat sowie beliebige Gemische dieser Isomeren, Hexahydro-1,3- und -1,4-phenylen-diisocyanat, Per-hydro-2,4'- und -4,4'-diphenyl-methan-diisocyanat, 1,3- und 1,4-Phenylendiisocyanat (DE-A 196 27 907), 1,4-Duroldiisocyanat (DDI), 4,4'-Stilbendiisocyanat (DE-A 196 28 145), 3,3'-Dimethyl-4,4'-biphenylendiisocyanat (DIBDI) (DE-A 195 09 819) 2,4- und 2,6-Toluylendiisocyanat (TDI) sowie beliebige Gemische dieser Isomeren, Diphenylmethan-2,4'-diisocyanat und/oder Diphenylmethan-4,4'-diisocyanat (MDI) oder Naphthylen-1,5-diisocyanat (NDI).

Ferner kommen beispielsweise erfindungsgemäß in Frage: Triphenylmethan-4,4',4"-triisocyanat, Polyphenyl-polymethylen-polyisocyanate, wie sie durch Anilin-Formaldehyd-Kondensation und anschließende Phosgenierung erhalten und z.B. in GB-A 874 430 und GB-A 848 671 beschrieben werden, m- und p-Isocyanatophenylsulfonylisocyanate gemäß US-A 3 454 606, perchlorierte Arylpolyisocyanate, wie sie in US-A 3 277 138 beschrieben werden, Carbodiimidgruppen aufweisende Polyisocyanate, wie sie in US-A 3 152 162 sowie in DE-A 25 04 400, 25 37 685 und 25 52 350 beschrieben werden, Norbornan-diisocyanate gemäß US-A 3 492 301, Allophanatgruppen aufweisende Polyisocyanate, wie sie in GB-A 994 890, der BE-B 761 626 und NL-A 7 102 524 beschrieben werden, Isocyanuratgruppen aufweisende Polyisocyanate, wie sie in US-A 3 001 9731, in DE-C 10 22 789, 12 22 067 und 1 027 394 sowie in DE-A 1 929 034 und 2 004 048 beschrieben werden, Urethangruppen aufweisende Polyisocyanate, wie sie z.B. in der BE-B 752 261 oder in US-A 3 394 164 und 3 644 457 beschrieben werden, acylierte Harnstoffgruppen aufweisende Polyisocyanate gemäß DE-C 1 230 778, Biuretgruppen aufweisende Polyisocyanate, wie sie in US-A 3 124 605, 3 201 372 und 3 124 605 sowie in GB-B 889 050 beschrieben werden, durch Telomerisationsreaktionen hergestellte Polyisocyanate, wie sie in US-A 3 654 106 beschrieben werden, Estergruppen aufweisende Polyisocyanate, wie sie in GB-B 965 474 und 1 072 956, in US-A 3 567 763 und in DE-C 12 31 688 genannt werden, Umsetzungsprodukte der obengenannten Isocyanate mit Acetalen gemäß DE-C 1 072 385 und polymere Fettsäureester enthaltende Polyisocyanate gemäß US-A 3 455 883.

Es ist auch möglich, die bei der technischen Isocyanatherstellung anfallenden, Isocyanatgruppen aufweisenden Destillationsrückstände, gegebenenfalls gelöst in einem oder mehreren der vorgenannten Polyisocyanate, einzusetzen. Ferner ist es möglich, beliebige Mischungen der vorgenannten Polyisocyanate zu verwenden.

Bevorzugt eingesetzt werden die technisch leicht zugänglichen Polyisocyanate, z.B. das 2,4- und 2,6-Toluylendiisocyanat sowie beliebige Gemische dieser Isomeren ("TDI"), Polyphenyl-polymethylen-polyisocyanate, wie sie durch Anilin-Formaldehyd-Kondensation und anschließende Phosgenierung hergestellt werden ("Roh-MDI") und Carbodiimidgruppen, Urethangruppen, Allophanatgruppen, Isocyanuratgruppen, Harnstoffgruppen oder Biuretgruppen aufweisenden Polyisocyanate ("modifizierte Polyisocyanate"), insbesondere solche modifizierten Polyisocyanate, die sich vom 2,4- und/oder 2,6-Toluylendiisocyanat bzw. vom 4,4'- und/oder 2,4'-Diphenylmethandiisocyanat ableiten. Gut geeignet sind auch Naphthylen-1,5-diisocyanat und Gemische der genannten Polyisocyanate.

Es können auch Isocyanatgruppen aufweisende Prepolymere verwendet werden, die erhältlich sind durch Umsetzung einer Teil- oder der Gesamtmenge der erfindungsgemäß einzusetzenden Polyoxyalkylenpolyesterpolyole und / oder einer Teil- oder der Gesamtmenge der den erfindungsgemäß einzusetzenden Polyoxyalkylenpolyesterpolyolen ggf. beizumischenden, oben beschriebenen isocyanatreaktiven Komponenten mit mindestens einem aromatischen Di- oder Polyisocyanat aus der Gruppe TDI, MDI, DIBDI, NDI, DDI, vorzugsweise mit 4,4'-MDI und/oder 2,4-TDI und/oder 1,5-NDI zu einem Urethangruppen, vorzugsweise Urethangruppen und Isocyanatgruppen aufweisenden Polyadditionsprodukt. Solche Polyadditionsprodukte weisen NCO-Gehalte von 0,05 bis 40,0 Gew.-% auf. Nach einer bevorzugt angewandten Ausführungsform werden die Isocyanatgruppen enthaltenden Prepolymere hergestellt durch Umsetzung von ausschließlich höhermolekularen Polyhydroxylverbindungen, also den erfindungsgemäß einzusetzenden Polyoxyalkylenpolyesterpolyolen und/oder Polyetherpolyolen, Polyesterpolyolen oder Polycarbonatpolyolen mit den Polyisocyanaten, vorzugsweise 4,4'-MDI, 2,4-TDI und/oder 1,5-NDI.

Die Isocyanatgruppen aufweisenden Prepolymere können in Gegenwart von Katalysatoren hergestellt werden. Es ist jedoch auch möglich, die Isocyanatgruppen aufweisenden Prepolymere in Abwesenheit von Katalysatoren herzustellen und diese der Reaktionsmischung zur Herstellung der PUR-Werkstoffe zuzufügen.

Als zum Zwecke der Schaumstoffherstellung gegebenenfalls einzusetzendes Treibmittel kann Wasser verwendet werden, das mit den organischen Polyisocyanaten oder mit den Isocyanatgruppen aufweisenden Prepolymeren *in situ* unter Bildung von Kohlendioxid und Aminogruppen reagiert, die ihrerseits mit weiteren Isocyanatgruppen zu Harnstoffgruppen weiterreagieren und hierbei als Kettenverlängerungsmittel wirken. Wird, um die gewünschte Dichte einzustellen, der Polyurethanformulierung Wasser zugegeben, wird dieses üblicherweise in Mengen von 0,001 bis 6,0 Gew.-%, bezogen auf das Gewicht der eingesetzten erfindungsgemäßen Polyoxyalkylenpolyesterpolyole, gegebenenfalls weiterer isocyanatreaktiver Komponenten, der Katalysatoren und weiterer Zusatzstoffe verwendet.

Als Treibmittel können anstelle von Wasser oder vorzugsweise in Kombination mit Wasser auch Gase oder leicht flüchtige anorganische oder organische Substanzen, die unter dem Einfluß der exothermen Polyadditionsreaktion verdampfen und vorteilhafterweise einen Siedepunkt unter Normaldruck im Bereich von -40 bis 120 °C, vorzugsweise von 10 bis 90 °C besitzen, als physikalische Treibmittel eingesetzt werden. Als organische Treibmittel können z.B. Aceton, Ethylacetat, Methylacetat, halogensubstituierte Alkane wie Methylenchlorid, Chloroform, Ethylidenchlorid, Vinylidenchlorid, Monofluortrichlormethan, Chlordifluormethan, Dichlordifluormethan, HFKWs wie R 134a, R 245fa und R 365mfc, ferner unsubstituierte Alkane wie Butan, n-Pentan, Isopentan, Cyclopentan, Hexan, Heptan oder Diethylether verwendet werden. Als anorganische Treibmittel kommen z.B. Luft, $CO_2$ oder $N_2O$ in Frage. Eine Treibwirkung kann auch erzielt werden durch Zusatz von Verbindungen, die sich bei Temperaturen oberhalb Raumtemperatur unter Abspaltung von Gasen, beispielsweise von Stickstoff und/oder Kohlendioxid, zersetzen wie Azoverbindungen, z.B. Azodicarbonamid oder Azoisobuttersäurenitril, oder Salzen wie Ammoniumbicarbonat, Ammoniumcarbamat oder Ammoniumsalzen organischer Carbonsäuren, z.B. der Monoammoniumsalze der Malonsäure, Borsäure, Ameisensäure oder Essigsäure. Weitere Beispiele für Treibmittel, Einzelheiten über die Verwendung von Treibmitteln und Kriterien für die Treibmittelwahl sind in R. Vieweg, A. Höchtlen (Hrsg.): "Kunststoff-Handbuch", Band VII, Carl-Hanser-Verlag, München 1966, S. 108f, 453ff und 507-510 sowie in D. Randall, S. Lee (Hrsg.): "The Polyurethanes Book", John Wiley & Sons, Ltd., London 2002, S. 127 - 136, S 232 - 233 und S. 261 beschrieben.

Die zweckmäßig einzusetzende Menge an festen Treibmitteln, niedrigsiedenden Flüssigkeiten oder Gasen, die jeweils einzeln oder in Form von Mischungen, z. B. als Flüssigkeits- oder Gasmischungen oder als Gas-Flüssigkeitsmischungen eingesetzt werden können, hängt ab von der angestrebten PUR-Werkstoffdichte und der eingesetzten Wassermenge. Die erforderlichen Mengen können experimentell leicht ermittelt werden. Zufriedenstellende Ergebnisse liefern üblicherweise Feststoffmengen von 0,5 bis 35 Gew.-Teilen, vorzugsweise 2 bis 15 Gew.-Teilen, Flüssigkeitsmengen von 1 bis 30 Gew.-Teilen, vorzugsweise von 3 bis 18 Gew.-Teilen und/oder Gasmengen von 0,01 bis 80 Gew.-Teilen, vorzugsweise von 10 bis 35 Gew.-Teilen, jeweils bezogen auf das Gewicht an Verbindungen mit gegenüber Isocyanaten reaktionsfähigen Wasserstoffatomen und das Gewicht der eingesetzten Polyisocyanate. Die Gasbeladung mit z. B. Luft, Kohlendioxid, Stickstoff und/oder Helium kann entweder über das Gemisch der eingesetzten erfindungsgemäßen Polyoxyalkylenpolyesterpolyole mit gegebenenfalls weiteren isocyanatreaktiven Komponenten, den Katalysatoren und weiteren Zusatzstoffen oder über die Polyisocyanate bzw. sowohl über das Gemisch der eingesetzten erfindungsgemäßen Polyoxyalkylenpolyesterpolyole mit gegebenenfalls weiteren isocyanatreaktiven Komponenten, den Katalysatoren und weiteren Zusatzstoffen einerseits und über die Polyisocyanate andererseits erfolgen.

In Abwesenheit von Feuchtigkeit und physikalisch oder chemisch wirkenden Treibmitteln können auch kompakte PUR-Werkstoffe, z. B. PUR-Elastomere, PUR-Gießelastomere oder Beschichtungen hergestellt werden.

Dem Fachmann geläufige und für die Polyurethanwerkstoffherstellung bewährte Aminkatalysatoren sind z. B. tertiäre Amine wie Triethylamin, Tributylamin, N-Methylmorpholin, N-Ethyl-morpholin, N,N,N',N'-Tetramethyl-ethylendiamin, Pentamethyldiethylen-triamin und höhere Homologe (DE-OS 26 24 527 und 26 24 528), 1,4-Diaza-bicyclo-(2,2,2)-octan, N-Methyl-N'-dimethylaminoethyl-piperazin, Bis-(dimethylaminoalkyl)-piperazine (DE-A 26 36 787), N,N-Dimethylbenzylamin, N,N-Dimethylcyclohexylamin, N,N-Diethylbenzylamin, Bis-(N,N-diethylaminoethyl)adipat, N,N,N',N'-Tetramethyl-1,3-butandiamin, N,N-Dimethyl-β-phenyl-ethyl-amin, Bis-(dimethylaminopropyl)-harnstoff, 1,2-Dimethylimidazol, 2-Methylimidazol, monocyclische und bicyclische Amidine (DE-A 17 20 633), Bis-(dialkylamino)-alkylether (US-A 3 330 782, DE-B 10 30 558, DE-A 18 04 361 und 26 18 280) sowie Amidgruppen (vorzugsweise Formamidgruppen) aufweisende tertiäre Amine gemäß DE-A 25 23 633 und 27 32 292). Als Katalysatoren kommen auch an sich bekannte Mannichbasen aus sekundären Aminen, wie Dimethylamin, und Aldehyden, vorzugsweise Formaldehyd, oder Ketonen wie Aceton, Methylethylketon oder Cyclohexanon und Phenolen, wie Phenol oder alkylsubstituierten Phenolen, in Frage. Gegenüber Isocyanatgruppen aktive Wasserstoffatome aufweisende tertiäre Amine als Katalysator sind z.B. Triethanolamin, Triisopropanolamin, N-Methyldiethanolamin, N-Ethyl-diethanolamin, N,N-Dimethyl-ethanolamin, deren Umsetzungsprodukte mit Alkylenoxiden wie Propylenoxid und/oder Ethylenoxid sowie sekundär-tertiäre Amine gemäß DE-A 27 32 292. Als Katalysatoren können ferner Silaamine mit Kohlenstoff-Silizium-Bindungen, wie sie in US-A 3 620 984 beschrieben sind, eingesetzt werden, z.B. 2,2,4-Trimethyl-2-silamorpholin und 1,3-Diethyl-aminomethyl-tetramethyl-disiloxan. Weiterhin kommen auch stickstoffhaltige Basen wie Tetraalkylammoniumhydroxide, ferner Hexahydrotriazine in Betracht. Die Reaktion zwischen NCO-Gruppen und zerewitinoff-aktiven Wasserstoffatomen wird auch durch Lactame und Azalactame stark beschleunigt, wobei sich zunächst ein Assoziat zwischen dem Lactam und der Verbindung mit acidem Wasserstoff ausbildet.

Werden für die Katalyse der Polyurethanreaktion Amine als Katalysatoren eingesetzt, so ist natürlich zu beachten, dass erfindungsgemäß unter Amin-Katalyse hergestellte Polyoxyalkylenpolyesterpolyole bereits gegebenenfalls katalytisch aktive Amine enthalten. Durch geeignete Versuchsreihen ist es dem Fachmann jedoch leicht möglich, die Mengen gegebenenfalls noch zuzusetzender Aminkatalysatoren zu ermitteln.

Des Weiteren können als Katalysatoren für diesen Zweck übliche organische Metallverbindungen eingesetzt werden, vorzugsweise organische Zinnverbindungen wie Zinn-(II)-Salze von organischen Carbonsäuren, z. B. Zinn-(II)-acetat, Zinn-(II)-octoat, Zinn-(II)-ethylhexoat und Zinn-(II)-Taurat und die Dialkylzinn-(IV)-salze von Mineralsäuren oder organischen Carbonsäuren, z. B. Dibutylzinndiacetat, Dibutylzinndilaurat, Dibutylzinnmaleat, Dioctylzinndiacetat und Dibutylzinndichlorid. Daneben können auch schwefelhaltige Verbindungen wie Di-n-octyl-zinn-mercaptid (US-A 3 645 927) Verwendung finden.

Katalysatoren, welche die Trimerisierung von NCO-Gruppen in besonderer Weise katalysieren, werden zur Herstellung von Polyurethanwerkstoffen mit hohen Anteilen an so genannten Poly(isocyanurat)strukturen ("PIR-Schaumstoffe") eingesetzt. Üblicherweise kommen für die Herstellung solcher Materialien Rezepturen mit signifikanten Überschüssen von NCO-Gruppen gegenüber OH-Gruppen zur Anwendung. PIR-Schaumstoffe werden üblicherweise bei Kennzahlen von 180 bis 450 hergestellt, wobei die Kennzahl als das mit dem Faktor 100 multiplizierte Verhältnis von Isocyanatgruppen zu Hydroxygruppen definiert ist. Katalysatoren, die zur Ausprägung von Isocyanuratstrukturen beitragen, sind Metallsalze wie beispielsweise Kalium-oder Natriumacetat, Natriumoctoat und Aminoverbindungen wie 1,3,5-Tris(3-dimethylaminopropyl)hexahydrotriazin.

Die Katalysatoren bzw. Katalysatorkombinationen werden in der Regel in einer Menge zwischen etwa 0,001 und 10 Gew.-%, insbesondere 0,01 bis 4 Gew.-%, bezogen auf die Gesamtmenge an Verbindungen mit mindestens zwei gegenüber Isocyanaten reaktionsfähigen Wasserstoffatomen, eingesetzt.

Bei der Herstellung der kompakten oder geschäumten PUR-Werkstoffe können gegebenenfalls Zusatzstoffe mitverwendet werden. Genannt seien beispielsweise oberflächenaktive Zusatzstoffe, wie Emulgatoren, Schaumstabilisatoren, Zellregler, Flammschutzmittel, Keimbildungsmittel, Oxidationsverzögerer, Stabilisatoren, Gleit- und Entformungsmittel, Farbstoffe, Dispergierhilfen und Pigmente. Als Emulgatoren kommen z.B. die Natriumsalze von Ricinusölsulfonaten oder Salze von Fettsäuren mit Aminen wie ölsaures Diethylamin oder stearinsaures Diethanolamin in Frage. Auch Alkali- oder Ammoniumsalze von Sulfonsäuren wie etwa von Dodecylbenzolsulfonsäure oder Dinaphthylmethandisulfonsäure oder von Fettsäuren wie Ricinolsäure oder von polymeren Fettsäuren können als oberflächenaktive Zusatzstoffe mitverwendet werden. Als Schaumstabilisatoren kommen vor allem Polyethersiloxane in Frage. Diese Verbindungen sind im Allgemeinen so aufgebaut, dass Copolymerisate aus Ethylenoxid und Propylenoxid mit einem Polydimethylsiloxanrest verbunden sind. Derartige Schaumstabilisatoren können gegenüber Isocyanaten reaktiv sein oder durch Veretherung der endständigen OH-Gruppen gegenüber Isocyanaten unreaktiv sein. Sie sind z. B. in US-A 2 834 748, 2 917 480 und 3 629 308 beschrieben. Allgemeine Strukturen solcher Schaumstabilisatoren sind in G. Oertel (Hrsg.): "Kunststoff-Handbuch", Band VII, Carl-Hanser-Verlag, München, Wien 1993, S. 113 - 115 wiedergegeben. Von besonderem Interesse sind vielfach über Allophanatgruppen verzweigte Polysiloxan-Polyoxyalkylen-Copolymere gemäß DE-A 25 58 523. Geeignet sind auch andere Organopolysiloxane, oxyethylierte Alkylphenole, oxyethylierte Fettalkohole und Paraffinöle, und Zellregler wie Paraffine, Fettalkohole und Dimethylpolysiloxane. Zur Verbesserung der Emulgierwirkung, der Dispergierung des Füllstoffs, der Zellstruktur und/oder zu deren Stabilisierung eignen sich ferner oligomere Polyacrylate mit Polyoxyalkylen- und Fluoralkanresten als Seitengruppen. Die oberflächenaktiven Substanzen werden üblicherweise in Mengen von 0,01 bis 5 Gew.-Teilen, bezogen auf 100 Gew.-Teile der Gesamtmenge an Verbindungen mit gegenüber Isocyanaten reaktionsfähigen Wasserstoffatomen angewandt. Zugesetzt werden können auch Reaktionsverzögerer z.B. sauer reagierende Stoffe wie Salzsäure, oder organische Säuren und Säurehalogenide, sowie Pigmente oder Farbstoffe und an sich bekannte Flammschutzmittel, z.B. Tris-(chlorethyl)phosphat, Triethylphosphat, Trikresylphosphat oder Ammoniumphosphat und - polyphosphat, ferner Stabilisatoren gegen Alterungs- und Witterungseinflüsse, Weichmacher und fungizid und bakterizid wirkende Substanzen. Weitere Beispiele von gegebenenfalls erfindungsgemäß mitzuverwendenden oberflächenaktiven Zusatzstoffen und Schaumstabilisatoren sowie Zellreglern, Reaktionsverzögerern, Stabilisatoren, flammhemmenden Substanzen, Weichmachern, Farbstoffen und Füllstoffen sowie fungistatisch und bakteriostatisch wirksamen Substanzen sowie Einzelheiten über Verwendungs- und Wirkungsweise dieser Zusatzmittel sind in R. Vieweg, A. Höchtlen (Hrsg.): "Kunststoff-Handbuch", Band VII, Carl-Hanser-Verlag, München 1966, S.103-113 beschrieben.

Zur Herstellung der PUR/PIR-Werkstoffe kann das Mengenverhältnis der Isocyanatgruppen in den Polyisocyanaten zu den gegenüber den Isocyanaten reaktiven Wasserstoffen enthalten in der Gesamtmenge an Verbindungen mit gegenüber Isocyanaten reaktionsfähigen Wasserstoffatomen stark variiert werden. Üblich sind Verhältnisse von 0,7:1 bis 5:1.

Die PUR-Werkstoffe können nach den in der Literatur beschriebenen Verfahren, z.B. dem one-shot- oder dem Prepolymer-Verfahren, mit Hilfe von dem Fachmann im Prinzip bekannten Mischvorrichtungen hergestellt werden.

## Beispiele für die Herstellung der erfindungsgemäßen Polyoxyalkylenpolyesterpolyole

### Eingesetzte Rohstoffe:

### Sojaöl:

Sojaöl (raffiniert, d. h. entlecithiniert, neutralisiert, entfärbt und dampfgestrippt), bezogen von der Sigma-Aldrich Chemie GmbH, München.

### Irganox® 1076:

Octadecyl-3-(3,5-di-tert.butyl-4-hydroxyphenyl)propionat

### Methoden:

### OH-Zahl-Bestimmung

Die Bestimmung der OH-Zahlen erfolgte gemäß der Vorschrift der DIN 53240.

### Bestimmung der Viskosität

Die Bestimmung der Viskositäten erfolgte nach der Vorschrift der DIN 53019 mittels Stabinger-Viskosimeter (Stabinger SVM 3000, Hersteller: Anton Paar)

### Bestimmung der Säurezahl

Die Bestimmung der Säurezahl erfolgte potentiometrisch nach der Vorschrift der DIN EN ISO 2114.

### Bestimmung der Farbzahl

Die Farbzahlen wurden nach der Gardner-Methode (ASTM D 4890 - 88) bestimmt. Soweit nicht anders angegeben, wurden die Proben zur Bestimmung der Farbzahl im Gewichtsverhältnis 1:2 in Dimethylsulfoxid gelöst.

### Beispiel 1 (Vergleich)

In einen 10 1 Laborautoklaven wurden unter Stickstoffatmosphäre 516,6 g Diethylenglykol (DEG), 357,9 g Glycerin, 1703,4 g Sojaöl, 9,533 g N-Methylimidazol (NMI) und 2179,4 g Phthalsäureanhydrid gegeben. Nach Verschließen des Reaktors wurde Sauerstoff bei Raumtemperatur durch 5-maliges Beaufschlagen des Autoklaven mit Stickstoff bis zu einem Absolutdruck von 4 bar und anschließendes Ablassen des Überdrucks auf Normaldruck entfernt. Sodann wurde der Reaktor unter Rühren (200 U / min, Gitterrührer) auf 120 °C aufgeheizt. Nach Erreichen dieser Temperatur wurde die Rührerdrehzahl auf 350 U / min (entsprechend einem auf das nach Abschluss der Dosierung aller Edukte im Reaktor befindlichen Flüssigkeitsvolumen bezogenen spezifischen Leistungseintrag von 2.1 W/1) erhöht und der Reaktordruck mit Stickstoff auf 2,5 bar eingestellt. Es wurden bei dieser Temperatur insgesamt 1278,4 g Ethylenoxid über einen Zeitraum von insgesamt 6,2 h eindosiert. Nach beendeter Ethylenoxiddosierung schloss sich eine Nachreaktionszeit von 4,4 h an. Schließlich wurde das Produkt im Vakuum (25 mbar) über einen Zeitraum von 25 min. bei 120 °C ausgeheizt. Während der Abkühlphase wurden 3,073 g IRGANOX® 1076 zugegeben. Man erhielt ein bei 40 °C zweiphasiges Produkt mit einer OH-Zahl von 212 mg KOH / g und einer Säurezahl von 44 ppm KOH. Seine Viskosität betrug 5950 mPas bei 25 °C. Die Farbzahl (Gardner) betrug 8,3.

### Beispiel 2 (Vergleich)

In einen 10 1 Laborautoklaven wurden unter Stickstoffatmosphäre 513,2 g DEG, 356,4 g Glycerin, 1703,3 g Sojaöl, 9,025 g NMI und 2179,4 g Phthalsäureanhydrid gegeben. Nach Verschließen des Reaktors wurde Sauerstoff bei Raumtemperatur durch 5-maliges Beaufschlagen des Autoklaven mit Stickstoff bis zu einem Absolutdruck von 4 bar und anschließendes Ablassen des Überdrucks auf Normaldruck entfernt. Sodann wurde der Reaktor unter Rühren (100 U / min, Gitterrührer) auf 120 °C aufgeheizt. Nach Erreichen dieser Temperatur wurde die Rührerdrehzahl auf 350 U / min (entsprechend einem auf das nach Abschluss der Dosierung aller Edukte im Reaktor befindlichen Flüssigkeitsvolumen bezogenen spezifischen Leistungseintrag von 2.1 W/1)erhöht und der Reaktordruck mit Stickstoff auf 2,6 bar eingestellt. Es wurden bei dieser Temperatur insgesamt 1278,5 g Ethylenoxid eindosiert. Die ersten 840 g Ethylenoxid wurden mit einer Dosierrate von 140 g / h zugeführt, während die restliche Ethylenoxidmenge mit einer Dosierrate von 216 g / h zugeführt wurde. Nach beendeter Ethylenoxiddosierung schloss sich eine Nachreaktionszeit von 6,2 h an. Schließlich wurde das Produkt im Vakuum (15 mbar) über einen Zeitraum von 30 min. bei 120 °C ausgeheizt. Während der Abkühlphase wurden 3,016 g IRGANOX® 1076 zugegeben. Man erhielt ein bei 40 °C einphasiges Produkt mit einer OH-Zahl von 209 mg KOH / g und einer Säurezahl von 4 ppm KOH. Seine Viskosität betrug 6725 mPas bei 25 °C. Die Farbzahl (Gardner) betrug 9,3.

### Beispiel 3 (Vergleich)

In einen 10 1 Laborautoklaven wurden unter Stickstoffatmosphäre 513,4 g DEG, 356,8 g Glycerin, 1703,4 g Sojaöl, 9,049 g NMI und 2178,0 g Phthalsäureanhydrid gegeben. Nach Verschließen des Reaktors wurde Sauerstoff durch 4-maliges Beaufschlagen des Autoklaven mit Stickstoff bis zu einem Absolutdruck von 4 bar und anschließendes Ablassen des Überdrucks auf Normaldruck entfernt. Sodann wurde der Reaktor unter Rühren (200 U / min, Gitterrührer) auf 120 °C aufgeheizt. Nach Erreichen dieser Temperatur wurde die Rührerdrehzahl auf 350 U / min (entsprechend einem auf das nach Abschluss der Dosierung aller Edukte im Reaktor befindlichen Flüssigkeitsvolumen bezogenen spezifischen Leistungseintrag von 2.1 W/l) erhöht und der Reaktordruck mit Stickstoff auf 242 bar eingestellt. Es wurden bei dieser Temperatur insgesamt 1278,7 g Ethylenoxid mit einer Dosierrate von durchweg 220 g / h eindosiert. Nach der Dosierung von 426,3 g Ethylenoxid ließ man 15 min. nachreagieren und ließ den Reaktor über Nacht bei abgeschaltetem Rührer abkühlen. Nach Wiedereinschalten des Rührers und erneutem Aufheizen auf 120 °C wurde das restliche Ethylenoxid zudosiert. Nach beendeter Ethylenoxiddosierung schloss sich eine Nachreaktionszeit von 2,72 h an. Schließlich wurde das Produkt im Vakuum (27 mbar) über einen Zeitraum von 40 min. bei 120 °C ausgeheizt. Während der Abkühlphase wurden bei ca. 80 °C 3,005 g IRGANOX® 1076 zugegeben. Man erhielt ein bei 40 °C zweiphasiges Produkt mit einer OH-Zahl von 208 mg KOH / g und einer Säurezahl von 0 ppm KOH. Seine Viskosität betrug 6220 mPas bei 25 °C. Die Farbzahl (Gardner) betrug 8,9.

### Beispiel 4 (Vergleich)

In einen 10 1 Laborautoklaven wurden unter Stickstoffatmosphäre 514,3 g DEG, 356,4 g Glycerin, 1704,3 g Sojaöl und 9,027 g NMI gegeben. Nach Verschließen des Reaktors wurde Sauerstoff durch 4-maliges Beaufschlagen des Autoklaven mit Stickstoff bis zu einem Absolutdruck von 4 bar und anschließendes Ablassen des Überdrucks auf Normaldruck entfernt. Sodann wurde der Reaktor unter Rühren (200 U / min, Gitterrührer) auf 120 °C aufgeheizt. Nach Erreichen dieser Temperatur wurde die Rührerdrehzahl auf 350 U / min (entsprechend einem auf das nach Abschluss der Dosierung aller Edukte im Reaktor befindlichen Flüssigkeitsvolumen bezogenen spezifischen Leistungseintrag von 2.1 W/1) erhöht und der Reaktordruck mit Stickstoff auf 2,4 bar eingestellt. Es wurden bei dieser Temperatur zunächst 542,4 g Ethylenoxid mit einer Dosierrate von 213 g / h eindosiert. Danach ließ man 1,35 h nachreagieren und ließ den Reaktor über Nacht bei abgeschaltetem Rührer auf Raumtemperatur abkühlen. Es wurden sodann 2177,9 g Phthalsäureanhydrid durch den Befüllstutzen zugegeben. Nach Verschließen des Reaktors und Wiedereinschalten des Rührers (200 U / min.) wurde bei Raumtemperatur Sauerstoff durch 4-maliges Beaufschlagen des Autoklaven mit Stickstoff bis zu einem Absolutdruck von 4 bar und anschließendes Ablassen des Überdrucks auf Normaldruck entfernt. Unter Rühren mit 200 U / min wurde auf 120 °C aufgeheizt. Nach Erreichen dieser Temperatur wurde die Rührerdrehzahl auf 350 U / min erhöht und es wurden weitere 736,2 g Ethylenoxid mit einer Dosierrate von 217 g / h zugeführt. Nach beendeter Ethylenoxiddosierung schloss sich eine Nachreaktion von 3,1 h Dauer an. Schließlich wurde das Produkt im Vakuum (25 mbar) über einen Zeitraum von 40 min. bei 120 °C ausgeheizt. Während der Abkühlphase wurden bei ca. 80 °C 3,006 g IRGANOX® 1076 zugegeben. Man erhielt ein bei 40 °C helles, jedoch zweiphasiges Produkt mit einer OH-Zahl von 193 mg KOH / g und einer Säurezahl von 43 ppm KOH. Viskosität (25 °C) und Farbzahl ließen sich nicht ermitteln.

**Beispiel 5 (Vergleich)**

In einen 10 1 Laborautoklaven wurden unter Stickstoffatmosphäre 514,3 g DEG, 357,9 g Glycerin, und 9,024 g NMI gegeben. Nach Verschließen des Reaktors wurde Sauerstoff durch 4-maliges Beaufschlagen des Autoklaven mit Stickstoff bis zu einem Absolutdruck von 4 bar und anschließendes Ablassen des Überdrucks auf Normaldruck entfernt. Sodann wurde der Reaktor unter Rühren (200 U / min, Gitterrührer) auf 120 °C aufgeheizt. Nach Erreichen dieser Temperatur wurde die Rührerdrehzahl auf 350 U / min (entsprechend einem auf das nach Abschluss der Dosierung aller Edukte im Reaktor befindlichen Flüssigkeitsvolumen bezogenen spezifischen Leistungseintrag von 2.1 W/l) erhöht und der Reaktordruck mit Stickstoff auf 2,4 bar eingestellt. Es wurden bei dieser Temperatur zunächst 2243,3 g Ethylenoxid mit einer Dosierrate von 500 g / h eindosiert. Danach ließ man 1,02 h nachreagieren und ließ den Reaktor über Nacht bei abgeschaltetem Rührer auf Raumtemperatur abkühlen. Es wurden sodann 2179,4 g Phthalsäureanhydrid durch den Befüllstutzen zugegeben. Nach Verschließen des Reaktors und Wiedereinschalten des Rührers (200 U / min.) wurde bei Raumtemperatur Sauerstoff durch 4-maliges Beaufschlagen des Autoklaven mit Stickstoff bis zu einem Absolutdruck von 5 bar und anschließendes Ablassen des Überdrucks auf Normaldruck entfernt. Unter Rühren mit 200 U / min wurde auf 120 °C aufgeheizt. Nach Erreichen dieser Temperatur wurde der Reaktordruck auf 2,4 bar angehoben, die Rührerdrehzahl auf 350 U / min erhöht und es wurden 738,8 g Ethylenoxid mit einer Dosierrate von 220 g / h zugeführt. Nach beendeter Ethylenoxiddosierung schloss sich eine Nachreaktion von 3,4 h Dauer an. Schließlich wurde das Produkt im Vakuum (15 mbar) über einen Zeitraum von 40 min. bei 120 °C ausgeheizt. Während der Abkühlphase wurden bei ca. 80 °C 3,002 g IRGANOX® 1076 zugegeben. Man erhielt ein bei 40 °C dunkles, einphasiges Produkt mit einer OH-Zahl von 201 mg KOH / g und einer Säurezahl von 14 ppm KOH. Seine Viskosität betrug 8790 mPas bei 25 °C. Die Farbzahl (Gardner) betrug 10,2.

**Beispiel 6 (Vergleich)**

In einen 10 1 Laborautoklaven wurden unter Stickstoffatmosphäre 513,2 g DEG, 356,4 g Glycerin, und 9,119 g NMI gegeben. Nach Verschließen des Reaktors wurde Sauerstoff durch 4-maliges Beaufschlagen des Autoklaven mit Stickstoff bis zu einem Absolutdruck von 5 bar und anschließendes Ablassen des Überdrucks auf Normaldruck entfernt. Sodann wurde der Reaktor unter Rühren (200 U / min, Gitterrührer) auf 120 °C aufgeheizt. Nach Erreichen dieser Temperatur wurde die Rührerdrehzahl auf 350 U / min (entsprechend einem auf das nach Abschluss der Dosierung aller Edukte im Reaktor befindlichen Flüssigkeitsvolumen bezogenen spezifischen Leistungseintrag von 2.1 W/l) erhöht und der Reaktordruck mit Stickstoff auf 2,4 bar eingestellt. Es wurden bei dieser Temperatur zunächst 2126,3 g Ethylenoxid mit einer Dosierrate von 500 g / h eindosiert. Danach ließ man 0,67 h nachreagieren und ließ den Reaktor über Nacht bei abgeschaltetem Rührer auf Raumtemperatur abkühlen. Es wurden sodann 2178,3 g Phthalsäureanhydrid durch den Befüllstutzen zugegeben. Nach Verschließen des Reaktors und Wiedereinschalten des Rührers (200 U / min.) wurde bei Raumtemperatur Sauerstoff durch 4-maliges Beaufschlagen des Autoklaven mit Stickstoff bis zu einem Absolutdruck von 5 bar und anschließendes Ablassen des Überdrucks auf Normaldruck entfernt. Unter Rühren mit 200 U / min wurde auf 120 °C aufgeheizt. Nach Erreichen dieser Temperatur wurde der Reaktordruck auf 2,4 bar angehoben, die Rührerdrehzahl auf 350 U / min erhöht und es wurden 855,3 g Ethylenoxid mit einer Dosierrate von 220 g / h zugeführt. Nach beendeter Ethylenoxiddosierung schloss sich eine Nachreaktion von 6 h Dauer an. Schließlich wurde das Produkt im Vakuum (20 mbar) über einen Zeitraum von 40 min. bei 120 °C ausgeheizt. Während der Abkühlphase wurden bei ca. 80 °C 2,999 g IRGANOX® 1076 zugegeben. Man erhielt ein bei 40 °C dunkles, einphasiges Produkt mit einer OH-Zahl von 204 mg KOH / g und einer Säurezahl von 3 ppm KOH. Seine Viskosität betrug 9325 mPas bei 25 °C. Die Farbzahl (Gardner) betrug 16,3.

**Beispiel 7 (Vergleich)**

In einen 10 1 Laborautoklaven wurden unter Stickstoffatmosphäre 513,1 g DEG, 357,4 g Glycerin, 9,013 g NMI und 2179,1 g Phthalsäureanhydrid gegeben. Nach Verschließen des Reaktors wurde Sauerstoff durch 4-maliges Beaufschlagen des Autoklaven mit Stickstoff bis zu einem Absolutdruck von 5 bar und anschließendes Ablassen des Überdrucks auf Normaldruck entfernt. Sodann wurde der Reaktor unter Rühren (200 U / min, Gitterrührer) auf 120 °C aufgeheizt. Nach Erreichen dieser Temperatur wurde die Rührerdrehzahl auf 350 U / min (entsprechend einem auf das nach Abschluss der Dosierung aller Edukte im Reaktor befindlichen Flüssigkeitsvolumen bezogenen spezifischen Leistungseintrag von 2.1 W/1) erhöht und der Reaktordruck mit Stickstoff auf 2,1 bar eingestellt. Es wurden bei dieser Temperatur zunächst 2243,3 g Ethylenoxid innerhalb von 4,83 h eindosiert. Danach ließ man kurz nachreagieren und weitere 738,7 g Ethylenoxid wurden mit einer Dosierrate von 220 g / h zugeführt. Nach beendeter Ethylenoxiddosierung schloss sich eine Nachreaktion von 3,3 h Dauer an. Schließlich wurde das Produkt im Vakuum (13 mbar) über einen Zeitraum von 50 min. bei 120 °C ausgeheizt. Während der Abkühlphase wurden bei ca. 80 °C 2,999 g IRGANOX® 1076 zugegeben. Man erhielt ein bei 40 °C sehr dunkles, einphasiges Produkt mit einer OH-Zahl von 215 mg KOH / g und einer Säurezahl von 0 ppm KOH. Seine Viskosität betrug 7300 mPas bei 25 °C. Die Farbzahl (Gardner) überschritt den Wert von 20.

**Beispiel 8 (Vergleich)**

In einen 10 1 Laborautoklaven wurden unter Stickstoffatmosphäre 513,6 g DEG, 359,5 g Glycerin, 1703,6 g Sojaöl und 9,018 g NMI gegeben. Nach Verschließen des Reaktors wurde Sauerstoff durch 4-maliges Beaufschlagen des Autoklaven mit Stickstoff bis zu einem Absolutdruck von 5 bar und anschließendes Ablassen des Überdrucks auf Normaldruck entfernt. Sodann wurde der Reaktor unter Rühren (200 U / min, Gitterrührer) auf 120 °C aufgeheizt. Nach Erreichen dieser Temperatur wurde die Rührerdrehzahl auf 350 U / min (entsprechend einem auf das nach Abschluss der Dosierung aller Edukte im Reaktor befindlichen Flüssigkeitsvolumen bezogenen spezifischen Leistungseintrag von 2.1 W/1) erhöht und der Reaktordruck mit Stickstoff auf 2,2 bar eingestellt. Es wurden bei dieser Temperatur zunächst 852,5 g Ethylenoxid über einen Zeitraum von 3,05 h eindosiert. Danach ließ man 0,65 h nachreagieren und ließ den Reaktor über Nacht bei abgeschaltetem Rührer auf Raumtemperatur abkühlen. Es wurden sodann 2179,5 g Phthalsäureanhydrid durch den Befüllstutzen zugegeben. Nach Verschließen des Reaktors und Wiedereinschalten des Rührers (200 U / min.) wurde bei Raumtemperatur Sauerstoff durch 4-maliges Beaufschlagen des Autoklaven mit Stickstoff bis zu einem Absolutdruck von 5 bar und anschließendes Ablassen des Überdrucks auf Normaldruck entfernt. Unter Rühren mit 200 U / min wurde auf 120 °C aufgeheizt. Nach Erreichen dieser Temperatur wurde die Rührerdrehzahl auf 350 U / min erhöht, der Reaktordruck wurde auf 2,3 bar angehoben und es wurden weitere 426,1 g Ethylenoxid über einen Zeitraum von 3,01 h zugeführt. Nach beendeter Ethylenoxiddosierung schloss sich eine Nachreaktion von 0,53 h Dauer an. Schließlich wurde das Produkt im Vakuum (20 mbar) über einen Zeitraum von 1,1 h bei 120 °C ausgeheizt. Während der Abkühlphase wurden bei ca. 80 °C 2,995 g IRGANOX® 1076 zugegeben. Man erhielt ein bei 40 °C zweiphasiges Produkt mit einer OH-Zahl von 139 mg KOH / g und einer Säurezahl von 56,9 mg KOH / g. Viskosität (25 °C) und Farbzahl ließen sich aufgrund der Zweiphasigkeit des Endproduktes nicht ermitteln.

**Beispiel 9 (erfinderisch)**

In einen 10 1 Laborautoklaven wurden unter Stickstoffatmosphäre 513,6 g DEG, 360,3 g Glycerin, 1703,2 g Sojaöl und 9,037 g NMI gegeben. Nach Verschließen des Reaktors wurde Sauerstoff durch 4-maliges Beaufschlagen des Autoklaven mit Stickstoff bis zu einem Absolutdruck von 4,5 bar und anschließendes Ablassen des Überdrucks auf Normaldruck entfernt. Sodann wurde der Reaktor unter Rühren (200 U / min, Gitterrührer) auf 120 °C aufgeheizt. Nach Erreichen dieser Temperatur wurde die Rührerdrehzahl auf 350 U / min (entsprechend einem auf das nach Abschluss der Dosierung aller Edukte im Reaktor befindlichen Flüssigkeitsvolumen bezogenen spezifischen Leistungseintrag von 2.1 W/1) erhöht und der Reaktordruck mit Stickstoff auf 2,6 bar eingestellt. Es wurden bei dieser Temperatur zunächst 426,1 g Ethylenoxid innerhalb eines Zeitraums von 3,07 h eindosiert. Danach ließ man 0,8 h nachreagieren und ließ den Reaktor über Nacht bei abgeschaltetem Rührer auf Raumtemperatur abkühlen. Es wurden sodann 2178,8 g Phthalsäureanhydrid durch den Befüllstutzen zugegeben. Nach Verschließen des Reaktors und Wiedereinschalten des Rührers (200 U / min.) wurde bei Raumtemperatur Sauerstoff durch 4-maliges Beaufschlagen des Autoklaven mit Stickstoff bis zu einem Absolutdruck von 5 bar und anschließendes Ablassen des Überdrucks auf Normaldruck entfernt. Unter Rühren mit 200 U / min wurde auf 120 °C aufgeheizt. Nach Erreichen dieser Temperatur wurde der Reaktordruck auf 2,6 bar angehoben, die Rührerdrehzahl auf 350 U / min erhöht und es wurden 852,5 g Ethylenoxid über einen Zeitraum von 3,3 h zugeführt. Nach beendeter Ethylenoxiddosierung schloss sich eine Nachreaktion von 3,78 h Dauer an. Schließlich wurde das Produkt im Vakuum (23 mbar) über einen Zeitraum von 31 min. bei 120 °C ausgeheizt. Während der Abkühlphase wurden bei ca. 80 °C 3,037 g IRGANOX® 1076 zugegeben. Man erhielt ein bei 40 °C einphasiges Produkt mit einer OH-Zahl von 202 mg KOH / g und einer Säurezahl von < 0,1 ppm KOH. Seine Viskosität betrug 6690 mPas bei 25 °C. Die Farbzahl (Gardner) betrug 5,5.

**Beispiel 10 (erfinderisch)**

In einen 10 1 Laborautoklaven wurden unter Stickstoffatmosphäre 522,4 g DEG, 364,2 g Glycerin, 1734,1 g Sojaöl und 9,221 g NMI gegeben. Nach Verschließen des Reaktors wurde Sauerstoff durch 4-maliges Beaufschlagen des Autoklaven mit Stickstoff bis zu einem Absolutdruck von 5 bar und anschließendes Ablassen des Überdrucks auf Normaldruck entfernt. Sodann wurde der Reaktor unter Rühren (200 U / min, Gitterrührer) auf 120 °C aufgeheizt. Nach Erreichen dieser Temperatur wurde die Rührerdrehzahl auf 350 U / min (entsprechend einem auf das nach Abschluss der Dosierung aller Edukte im Reaktor befindlichen Flüssigkeitsvolumen bezogenen spezifischen Leistungseintrag von 2.1 W/1) erhöht und der Reaktordruck mit Stickstoff auf 2,5 bar eingestellt. Es wurden bei dieser Temperatur zunächst 223,2 g Ethylenoxid innerhalb eines Zeitraums von 1,12 h eindosiert. Danach ließ man 1,35 h nachreagieren und ließ den Reaktor über Nacht bei abgeschaltetem Rührer auf Raumtemperatur abkühlen. Es wurden sodann 2217,6 g Phthalsäureanhydrid durch den Befüllstutzen zugegeben. Nach Verschließen des Reaktors und Wiedereinschalten des Rührers (200 U / min.) wurde bei Raumtemperatur Sauerstoff durch 4-maliges Beaufschlagen des Autoklaven mit Stickstoff bis zu einem Absolutdruck von 5 bar und anschließendes Ablassen des Überdrucks auf Normaldruck entfernt. Unter Rühren mit 200 U / min wurde auf 120 °C aufgeheizt. Nach Erreichen dieser Temperatur wurde der Reaktordruck auf 2,7 bar angehoben, die Rührerdrehzahl auf 350 U / min erhöht und es wurden 1074,2 g Ethylenoxid über einen Zeitraum von 4,5 h zugeführt. Nach beendeter Ethylenoxiddosierung schloss sich eine Nachreaktion von 5,7 h Dauer an. Schließlich wurde das Produkt im Vakuum (18 mbar) über einen Zeitraum von 27 min. bei 120 °C ausgeheizt. Während der Abkühlphase wurden bei ca. 80 °C 3,021 g IRGANOX® 1076 zugegeben. Man erhielt ein bei 40 °C einphasiges Produkt mit einer OH-Zahl von 202 mg KOH / g und einer Säurezahl von 8 ppm KOH. Seine Viskosität betrug 6285 mPas bei 25 °C. Die Farbzahl (Gardner) betrug 7,2.

**Beispiel 11 (erfinderisch)**

In einen 10 1 Laborautoklaven wurden unter Stickstoffatmosphäre 514,3 g DEG, 357,5 g Glycerin, 1703,2 g Sojaöl und 9,377 g NMI gegeben. Nach Verschließen des Reaktors wurde Sauerstoff durch 4-maliges Beaufschlagen des Autoklaven mit Stickstoff bis zu einem Absolutdruck von 5 bar und anschließendes Ablassen des Überdrucks auf Normaldruck entfernt. Sodann wurde der Reaktor unter Rühren (200 U / min, Gitterrührer) auf 120 °C aufgeheizt. Nach Erreichen dieser Temperatur wurde die Rührerdrehzahl auf 300 U / min (entsprechend einem auf das nach Abschluss der Dosierung aller Edukte im Reaktor befindlichen Flüssigkeitsvolumen bezogenen spezifischen Leistungseintrag von 1,2 W/1) erhöht und der Reaktordruck mit Stickstoff auf 2,8 bar eingestellt. Es wurden bei dieser Temperatur zunächst 426,2 g Ethylenoxid innerhalb eines Zeitraums von 3,03 h eindosiert. Danach ließ man 0,66 h nachreagieren und ließ den Reaktor über Nacht bei abgeschaltetem Rührer auf Raumtemperatur abkühlen. Es wurden sodann 2178,5 g Phthalsäureanhydrid durch den Befüllstutzen zugegeben. Nach Verschließen des Reaktors und Wiedereinschalten des Rührers (200 U / min.) wurde bei Raumtemperatur Sauerstoff durch 4-maliges Beaufschlagen des Autoklaven mit Stickstoff bis zu einem Absolutdruck von 5 bar und anschließendes Ablassen des Überdrucks auf Normaldruck entfernt. Unter Rühren mit 200 U / min wurde auf 120 °C aufgeheizt. Nach Erreichen dieser Temperatur wurde der Reaktordruck auf 2,5 bar angehoben, die Rührerdrehzahl auf 300 U / min erhöht und es wurden 852,5 g Ethylenoxid über einen Zeitraum von 3,02 h zugeführt. Nach beendeter Ethylenoxiddosierung schloss sich eine Nachreaktion von 5,4 h Dauer an. Schließlich wurde das Produkt im Vakuum (24 mbar) über einen Zeitraum von 60 min. bei 120 °C ausgeheizt. Während der Abkühlphase wurden bei ca. 80 °C 3,073 g IRGANOX® 1076 zugegeben. Man erhielt ein bei 40 °C einphasiges Produkt mit einer OH-Zahl von 201 mg KOH / g. Seine Viskosität betrug 5805 mPas bei 25 °C. Die Farbzahl (Gardner) betrug 6,7.

**Beispiel 12 (erfinderisch)**

In einen 10 1 Laborautoklaven wurden unter Stickstoffatmosphäre 513,2 g DEG, 358,1 g Glycerin, 1703,2 g Sojaöl und 9,012 g NMI gegeben. Nach Verschließen des Reaktors wurde Sauerstoff durch 4-maliges Beaufschlagen des Autoklaven mit Stickstoff bis zu einem Absolutdruck von 5 bar und anschließendes Ablassen des Überdrucks auf Normaldruck entfernt. Sodann wurde der Reaktor unter Rühren (200 U / min, Gitterrührer) auf 120 °C aufgeheizt. Nach Erreichen dieser Temperatur wurde die Rührerdrehzahl auf 250 U / min (entsprechend einem auf das nach Abschluss der Dosierung aller Edukte im Reaktor befindlichen Flüssigkeitsvolumen bezogenen spezifischen Leistungseintrag von 0,8 W/1) erhöht und der Reaktordruck mit Stickstoff auf 2,5 bar eingestellt. Es wurden bei dieser Temperatur zunächst 426,1 g Ethylenoxid innerhalb eines Zeitraums von 3,10 h eindosiert. Danach ließ man 1,27 h nachreagieren und ließ den Reaktor über Nacht bei abgeschaltetem Rührer auf Raumtemperatur abkühlen. Es wurden sodann 2179,8 g Phthalsäureanhydrid durch den Befüllstutzen zugegeben. Nach Verschließen des Reaktors und Wiedereinschalten des Rührers (250 U / min.) wurde bei Raumtemperatur Sauerstoff durch 4-maliges Beaufschlagen des Autoklaven mit Stickstoff bis zu einem Absolutdruck von 5 bar und anschließendes Ablassen des Überdrucks auf Normaldruck entfernt. Unter Rühren mit 250 U / min wurde auf 120 °C aufgeheizt. Nach Erreichen dieser Temperatur wurde der Reaktordruck auf 2,5 bar angehoben, die Rührerdrehzahl auf 250 U / min belassen und es wurden 852,5 g Ethylenoxid über einen Zeitraum von 3,70 h zugeführt. Nach beendeter Ethylenoxiddosierung schloss sich eine Nachreaktion von 5,0 h Dauer an. Schließlich wurde das Produkt im Vakuum (23 mbar) über einen Zeitraum von 60 min. bei 120 °C ausgeheizt. Während der Abkühlphase wurden bei ca. 80 °C 3,068 g IRGANOX® 1076 zugegeben. Man erhielt ein bei 40 °C einphasiges Produkt mit einer OH-Zahl von 201 mg KOH / g. Seine Viskosität betrug 6780 mPas bei 25 °C. Die Farbzahl (Gardner) betrug 6,5.

Tabelle 1 (alle Versuche wurden, soweit nicht anders vermerkt, mit einem auf das nach Abschluss der Dosierung aller Edukte im Reaktor befindliche Flüssigkeitvolu bezogenen spezifischen Rührleistungseintrag von 2,1 W / 1 durchgeführt)

| Beispiel | In Schritt (ii) zugeführte mole Alkylenoxid / mole OH-Gruppen | Fettsäureester vorhanden | Eingesetzte Stoffmenge cyclisches Dicarbonsäureanhydrid [mol] | In Schritt (iv) zugeführte Stoffmenge Alkylenoxid [mol] | Molverhältnis Alkylenoxid in Stufe (iv) / cyclisches Dicarbonsäureanhydrid | OHZ [mg KOH / g] | Säurezahl | Viskosität bei 25 °C [mPas] | Farbzahl (Gardner) | Einphasig bei 40 °C? |
|---|---|---|---|---|---|---|---|---|---|---|
| 1 (Vergl.) | 0,00 | ja | 14,72 | 29,02 | 1,97 | 212 | 44 ppm KOH | 5950 | 8,3 | nein |
| 2 (Vergl.) * | 0,00 | ja | 14,72 | 29,02 | 1,97 | 209 | 4 ppm KOH | 6725 | 9,3 | ja |
| 3 (Vergl.) ** | 0,00 | ja | 14,71 | 29,03 | 1,97 | 208 | 0 ppm KOH | 6220 | 8,9 | nein |
| 4 (Vergl.) | 0,58 | ja | 14,71 | 16,71 | 1,14 | 193 | 43 ppm KOH | n. b.*** | n. b. | nein |
| 5 (Vergl.) | 2,38 | nein | 14,72 | 16,77 | 1,14 | 201 | 14 ppm KOH | 8790 | 10,2 | ja |
| 6 (Vergl.) | 2,26 | nein | 14,71 | 19,42 | 1,32 | 204 | 3 ppm KOH | 9325 | 16,3 | ja |
| 7 (Vergl.) | 0,00 | nein | 14,71 | 67,70 | 4,60 | 215 | 0 ppm KOH | 7300 | >20 | ja |
| 8 (Vergl.) | 0,90 | ja | 14,72 | 9,67 | 0,65 | 139 | 56,9 mg KOH /g | n. b. | n. b. | nein |
| 9 (erf.) | 0,45 | ja | 14,71 | 19,35 | 1,31 | 202 | 0 ppm KOH | 6690 | 5,5 | ja |
| 10 (erf.) | 0,23 | ja | 14,97 | 24,39 | 1,62 | 202 | 8 ppm KOH | 6285 | 7,2 | ja |
| 11 (erf.) **** | 0,45 | ja | 14,71 | 19,35 | 1,31 | 201 | n. b. | 5805 | 6,7 | ja |

(fortgesetzt)

| Beispiel | In Schritt (ii) zugeführte mole Alkylenoxid / mole OH-Gruppen | Fettsäureester vorhanden | Eingesetzte Stoffmenge cyclisches Dicarbonsäureanhydrid [mol] | In Schritt (iv) zugeführte Stoffmenge Alkylenoxid [mol] | Molverhältnis Alkylenoxid in Stufe (iv) / cyclisches Dicarbonsäureanhydrid | OHZ [mg KOH / g] | Säurezahl | Viskosität bei 25 °C [mPas] | Farbzahl (Gardner) | Einphasig bei 40 °C? |
|---|---|---|---|---|---|---|---|---|---|---|
| 12 (erf.) **** | 0,45 | ja | 14,72 | 19,35 | 1,31 | 201 | n. b. | 6780 | 6,5 | ja |

*: Im Vergleich zu Beispiel 1 reduzierte Epoxiddosierrate
**: Nach Dosierung von 1/3 der insgesamt zu dosierenden Epoxidmenge wurde die Dosierung über Nacht unterbrochen und man ließ abkühlen, bevor die Umsetzun folgenden Tag fortgesetzt wurde.
***: n. b.: nicht bestimmt
****: Beispiel 11: Spezifischer Rührleistungseintrag: 1,2 W / 1; Beispiel 12: Spezifischer Rührleistungseintrag: 0,8 W / 1
OHZ: OH-Zahl

**Patentansprüche**

1. Verfahren zur Herstellung von Polyoxyalkylenpolyesterpolyolen durch Umsetzung einer Starterverbindung (1) mit Zerewitnoff-aktiven H-Atomen, eines cyclischen Dicarbonsäureanhydrids (2) und eines Fettsäureesters (3) mit einem Alkylenoxid (4) in Gegenwart eines basischen Katalysators (5) umfassend folgende Schritte:

   (i) Bereitstellen einer Mischung (i) umfassend die Starterverbindung (1) undden Fettsäureester (3), wobei die Mischung (i) kein cyclisches Dicarbonsäureanhydrid (2) enthält
   (ii) Umsetzung der Mischung (i) aus Schritt (i) mit einer Teilmenge (v1) des Alkylenoxids (4), wobei mindestens 0,15 mol Alkylenoxid (4) pro 1 mol zerewitinoff-aktiver Wasserstoffatome der Starterverbindung (1) zugegeben wird unter Bildung einer Verbindung (ii);
   (iii) Umsetzung der in Schritt (ii) gebildeten Verbindung (ii) durch Zugabe des Dicarbonsäureanhydrids (2) unter Bildung einer Verbindung (iii);
   (iv) Umsetzung der Verbindung (iii) aus Schritt (iii) mit einer Teilmenge (v2) des Alkylenoxids (4), wobei mindestens 1,15 mol Alkylenoxid (4) pro 1 mol des Dicarbonsäureanhydrids (2) zugegeben wird.

2. Verfahren gemäß Anspruch 1, wobei die Summe der Teilmenge (v1) des in Schritt (ii) zugebenenen Alkylenoxids (4) und der Teilmenge (v2) des in Schritt (iv) zugebenenen Alkylenoxids (4) 90 mol-%, bevorzugt 95 mol-% und besonders bevorzugt 100 % der Gesamtmenge (vG) des zugegebenen Alkylenoxids (4) entspricht.

3. Verfahren gemäß Anspruch 1 oder 2, wobei der basische Katalysator (5) in Schritt (i) und/oder in Schritt (iii) und/oder in Schritt (iv), bevorzugt in Schritt (i) zugegeben wird.

4. Verfahren gemäß einem der Ansprüche 1 bis 3, wobei der basische Katalysator (5) ein Amin, bevorzugt ein aromatisches Amin ist.

5. Verfahren gemäß Anspruch 4, wobei das Amin ein aromatisches Amin ist und das aromatische Amin eine oder mehrere Verbindungen ist und ausgewählt wird aus der Gruppe bestehend aus Imidazol, 1-Methylimidazol, 2-Methylimidazol, 4(5)-Methylimidazol, 2,4(5)Dimethylimidazol, 1-Ethylimidazol, 2-Ethylimidazol, 1-Phenylimidazol, 2-Phenylimidazol, 4(5)Phenylimidazol, und N,N-dimethylaminopyridin.

6. Verfahren gemäß einem der Ansprüche 1 bis 5, wobei das Alkylenoxid (4) Propylenoxid und/oder Ethylenoxid bevorzugt Ethylenoxid ist.

7. Verfahren gemäß einem der Ansprüche 1 bis 6, wobei der Fettsäureester (3) in Mengen von 10 Gew.-% bis 70 Gew.-%, bevorzugt von 10 Gew.-% bis 40 Gew.-%, und besonders bevorzugt von 10 Gew.-% bis 30 Gew.-%, bezogen auf die Summe aller Komponenten eingesetzt wird.

8. Verfahren gemäß einem der Ansprüche 1 bis 7, wobei der Fettsäureester (3) keine freien Hydroxylgruppen in den Fettsäureresten aufweist.

9. Verfahren gemäß Anspruch 8, wobei der Fettsäureester (3) ohne freie Hydroxylgruppen in den Fettsäureresten eine oder mehrere Verbindungen ist und ausgewählt wird aus der Gruppe bestehend aus Baumwollsaatöl, Erdnussöl, Kokosöl, Leinöl, Palmkernöl, Olivenöl, Maisöl, Palmöl, Jatrophaöl, Rapsöl, Sojaöl, Sonnenblumenöl, Heringsöl, Sardinenöl und Talg.

10. Verfahren gemäß einem der Ansprüche 1 bis 9, wobei das cyclische Dicarbonsäureanhydrid (2) ein aromatisches cyclisches Dicarbonsäureanhydrid ist.

11. Verfahren gemäß einem der Ansprüche 1 bis 10, wobei der eingebrachte Leistungseintrag zwischen 0,8 und 5 W/1, bevorzugt zwischen 0,8 und 3 W/1, bezogen auf das Flüssigkeitsvolumen nach Beendigung von Schritt (iv), beträgt.

12. Polyoxyalkylenpolyesterpolyol erhältlich nach einem der Ansprüche 1 bis 11.

13. Polyoxyalkylenpolyesterpolyol gemäß Anspruch 12 mit einer OH-Zahl von 100 und 300 mg KOH / g, wobei die OH-Zahl mittels der im Experimentalteil angegebenen Methode bestimmt wurde.

14. Polyoxyalkylenpolyesterpolyol gemäß Anspruch 12 oder 13 mit einer nach der Gardner-Methode bestimmten Farbzahl von 2,0 bis 8,0, bevorzugt von 3,0 bis 7,5, wobei die nach der Gardner-Methode bestimmte Farbzahl mittels der im Experimentalteil beschriebenen Methode bestimmt wurde.

15. Verfahren zur Herstellung von Polyurethanen durch Umsetzung des Polyoxyalkylenpolyesterpolyols gemäß einem der Ansprüche 12 bis 14 mit einem Polyisocyanat.

**Claims**

1. Process for preparing polyoxyalkylene polyester polyols by reaction of a starter compound (1) having Zerewitinoff-active H atoms, a cyclic dicarboxylic anhydride (2) and a fatty acid ester (3) with an alkylene oxide (4) in the presence of a basic catalyst (5) comprising the following steps of:

   (i) providing a mixture (i) comprising the starter compound (1) and the fatty acid ester (3), wherein the mixture (i) contains no cyclic dicarboxylic anhydride (2);
   (ii) reacting the mixture (i) from step (i) with a portion (v1) of the alkylene oxide (4), wherein at least 0.15 mol of alkylene oxide (4) per 1 mol of Zerewitinoff-active hydrogen atoms of the starter compound (1) is added to form a compound (ii);
   (iii) reacting the compound (ii) formed in step (ii) by addition of the dicarboxylic anhydride (2) to form a compound (iii);
   (iv) reacting the compound (iii) from step (iii) with a portion (v2) of the alkylene oxide (4), wherein at least 1.15 mol of alkylene oxide (4) per 1 mol of the dicarboxylic anhydride (2) is added.

2. Process according to Claim 1, wherein the sum of the portion (v1) of the alkylene oxide (4) added in step (ii) and the portion (v2) of the alkylene oxide (4) added in step (iv) is 90 mol%, preferably 95 mol% and particularly preferably 100% of the total amount (vT) of the alkylene oxide (4) added.

3. Process according to Claim 1 or 2, wherein the basic catalyst (5) is added in step (i) and/or in step (iii) and/or in step (iv), preferably in step (i).

4. Process according to any of Claims 1 to 3, wherein the basic catalyst (5) is an amine, preferably an aromatic amine.

5. Process according to Claim 4, wherein the amine is an aromatic amine and the aromatic amine is one or more compounds and is selected from the group consisting of imidazole, 1-methylimidazole, 2-methylimidazole, 4(5)-methylimidazole, 2,4(5)-dimethylimidazole, 1-ethylimidazole, 2-ethylimidazole, 1-phenylimidazole, 2-phenylimidazole, 4(5)-phenylimidazole, and N,N-dimethylaminopyridine.

6. Process according to any of Claims 1 to 5, wherein the alkylene oxide (4) is propylene oxide and/or ethylene oxide, preferably ethylene oxide.

7. Process according to any of Claims 1 to 6, wherein the fatty acid ester (3) is employed in amounts of 10% by weight to 70% by weight, preferably 10% by weight to 40% by weight and particularly preferably 10% by weight to 30% by weight, based on the sum of all components.

8. Process according to any of Claims 1 to 7, wherein the fatty acid ester (3) has no free hydroxyl groups in the fatty acid residues.

9. Process according to Claim 8, wherein the fatty acid ester (3) without free hydroxyl groups in the fatty acid residues is one or more compounds and is selected from the group consisting of cottonseed oil, peanut oil, coconut oil, linseed oil, palm kernel oil, olive oil, corn oil, palm oil, jatropha oil, rapeseed oil, soybean oil, sunflower oil, herring oil, sardine oil and tallow.

10. Process according to any of Claims 1 to 9, wherein the cyclic dicarboxylic anhydride (2) is an aromatic cyclic dicarboxylic anhydride.

11. Process according to any of Claims 1 to 10, wherein the power input introduced is between 0.8 and 5 W/l, preferably between 0.8 and 3 W/l, based on the liquid volume after termination of step (iv).

**12.** Polyoxyalkylene polyester polyol obtainable according to any of Claims 1 to 11.

**13.** Polyoxyalkylene polyester polyol according to Claim 12 having an OH number of 100 to 300 mg KOH/g, wherein the OH number has been determined by means of the method reported in the experimental section.

**14.** Polyoxyalkylene polyester polyol according to Claim 12 or 13 having a color number determined by the Gardner method of 2.0 to 8.0, preferably of 3.0 to 7.5, wherein the color number determined by the Gardner method has been determined by means of the method described in the experimental section.

**15.** Process for preparing polyurethanes by reaction of the polyoxyalkylene polyester polyol according to any of Claims 12 to 14 with a polyisocyanate.

**Revendications**

**1.** Procédé pour la préparation de polyoxyalkylène-polyester-polyols par transformation d'un composé de départ (1) présentant des atomes d'H actif selon Zerewitinoff, d'un anhydride d'acide carboxylique (2) et d'un ester d'acide gras (3) avec un oxyde d'alkylène (4) en présence d'un catalyseur basique (5) comprenant les étapes suivantes :

(i) préparation d'un mélange (i) comprenant le composé de départ (1) et l'ester d'acide gras (3), le mélange (i) ne contenant pas d'anhydride d'acide dicarboxylique cyclique (2)
(ii) transformation du mélange (i) de l'étape (i) avec une quantité partielle (v1) de l'oxyde d'alkylène (4), au moins 0,15 mole d'oxyde d'alkylène (4) par 1 mole d'atomes hydrogène actif selon Zerewitinoff du composé de départ (1) étant ajoutée, avec formation d'un composé (ii) ;
(iii) transformation du composé (ii) formé dans l'étape (ii) par addition de l'anhydride d'acide carboxylique (2) avec formation d'un composé (iii) ;
(iv) transformation du composé (iii) de l'étape (iii) avec une quantité partielle (v2) de l'oxyde alkylène (4), au moins 1,15 mole d'oxyde alkylène (4) par 1 mole de l'anhydride acide carboxylique (2) étant ajoutée.

**2.** Procédé selon la revendication 1, la somme de la quantité partielle (v1) de l'oxyde alkylène (4) ajouté dans l'étape (ii) et de la quantité partielle (v2) de l'oxyde d'alkylène (4) ajouté dans l'étape (iv) correspondant à 90% en mole, de préférence à 95% en mole et de manière particulièrement préférée à 100% de la quantité totale (vG) de l'oxyde d'alkylène (4) ajouté.

**3.** Procédé selon la revendication 1 ou 2, le catalyseur basique (5) étant ajouté dans l'étape (i) et/ou dans l'étape (iii) et/ou dans l'étape (iv), de préférence dans l'étape (i).

**4.** Procédé selon l'une quelconque des revendications 1 à 3, le catalyseur basique (5) étant une amine, de préférence une amine aromatique.

**5.** Procédé selon la revendication 4, l'amine étant une amine aromatique et l'amine aromatique étant un ou plusieurs composés et choisie dans le groupe constitué par imidazole, 1-méthylimidazole, 2-méthylimidazole, 4(5)-méthylimidazole, 2,4(5)-diméthylimidazole, 1-éthylimidazole, 2-éthylimidazole, 1-phénylimidazole, 2-phénylimidazole, 4(5)-phénylimidazole et N,N-diméthylaminopyridine.

**6.** Procédé selon l'une quelconque des revendications 1 à 5, l'oxyde d'alkylène (4) étant l'oxyde de propylène et/ou l'oxyde d'éthylène, de préférence l'oxyde d'éthylène.

**7.** Procédé selon l'une quelconque des revendications 1 à 6, l'ester d'acide gras (3) étant utilisé en des quantités de 10% en poids à 70% en poids, de préférence de 10% en poids à 40% en poids et de manière particulièrement préférée de 10% en poids à 30% poids, par rapport à la somme de tous les composants.

**8.** Procédé selon l'une quelconque des revendications 1 à 7, l'ester d'acide gras (3) ne présentant pas de groupes hydroxyle libre dans les radicaux d'acide gras.

**9.** Procédé selon la revendication 8, l'ester d'acide gras (3) sans groupes hydroxyle libre dans les radicaux d'acide gras étant un ou plusieurs composés et choisi dans le groupe constitué par l'huile de graines de coton, l'huile d'arachide, l'huile de coco, l'huile de lin, l'huile de palmiste, l'huile d'olive, l'huile de maïs, l'huile de palme, l'huile de jatropha, l'huile de colza, l'huile de soja, l'huile de tournesol, l'huile de hareng, l'huile de sardine et le suif.

10. Procédé selon l'une quelconque des revendications 1 à 9, l'anhydride d'acide dicarboxylique cyclique (2) étant un anhydride acide dicarboxylique cyclique aromatique.

11. Procédé selon l'une quelconque des revendications 1 à 10, la puissance introduite étant située entre 0,8 et 5 W/l, de préférence entre 0,8 et 3 W/l, par rapport au volume de liquide après la fin de l'étape (iv).

12. Polyoxyalkylène-polyester-polyol pouvant être obtenu selon l'une quelconque des revendications 1 à 11.

13. Polyoxyalkylène-polyester-polyol selon la revendication 12, présentant un indice d'OH de 100 à 300 mg de KOH/g, l'indice d'OH étant déterminé au moyen de la méthode indiquée dans la partie expérimentale.

14. Polyoxyalkylène-polyester-polyol selon la revendication 12 ou 13 présentant un indice de couleur déterminé selon la méthode de Gardner de 2,0 à 8,0, de préférence de 3,0 à 7,5, l'indice de couleur déterminé selon la méthode de Gardner étant déterminé au moyen de la méthode indiquée dans la partie expérimentale.

15. Procédé pour la préparation de polyuréthanes par transformation du polyoxyalkylène-polyester-polyol selon l'une quelconque des revendications 12 à 14 avec un polyisocyanate.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1923417 A1
- EP 2807199 A1
- EP 1525244 A
- EP 2177555 A2
- DE 3916340
- EP 2028211 A
- WO 2009106244 A
- WO 9820061 A
- US 2004167316 A
- US 4521548 A
- DE 10024313 A
- RO 118433
- US 4507475 A
- EP 0693513 A
- EP 1751213 A
- WO 0114456 A
- JP 6157743 A
- WO 9620972 A
- US 3823145 A
- US 3404109 A
- US 3829505 A
- US 3941849 A
- US 5158922 A
- US 5470813 A
- EP 700949 A
- EP 743093 A
- EP 761708 A
- WO 9740086 A
- WO 9816310 A
- WO 0047649 A
- DE 1202785 B
- US 3401190 A
- DE 19627907 A
- DE 19628145 A
- DE 19509819 A
- GB 874430 A
- GB 848671 A
- US 3454606 A
- US 3277138 A
- US 3152162 A
- DE 2504400 A
- DE 2537685 A
- DE 2552350 A
- US 3492301 A
- GB 994890 A
- BE 761626 B
- NL 7102524 A
- US 30019731 A
- DE 1022789 C
- DE 1222067 C
- DE 1027394 C
- DE 1929034 A
- DE 2004048 A
- BE 752261 B
- US 3394164 A
- US 3644457 A
- DE 1230778 C
- US 3124605 A
- US 3201372 A
- GB 889050 B
- US 3654106 A
- GB 965474 B
- GB 1072956 B
- US 3567763 A
- DE 1231688 C
- DE 1072385 C
- US 3455883 A
- DE 1720633 A
- US 3330782 A
- DE 1030558 B
- DE 1804361 A
- DE 2618280 A
- DE 2523633 A
- DE 2732292 A
- US 3620984 A
- US 3645927 A
- US 2834748 A
- US 2917480 A
- US 3629308 A
- DE 2558523 A

**In der Beschreibung aufgeführte Nicht-Patentliteratur**

- **M. IONESCU.** *Advances in Urethanes Science and Technology,* 1998, vol. 14, 151-218
- *B. Ullmann's Encyclopedia of Industrial Chemistry,* 1992, vol. B4 (5), 167ff
- Handbuch Apparate. Vulkan-Verlag, 1990, 188-208
- Kunststoff-Handbuch. Carl-Hanser-Verlag, 1966, vol. VII, 108, , 453, , 507-510

- The Polyurethanes Book. John Wiley & Sons, Ltd, 2002, 127-136, 232-233, 261
- Kunststoff-Handbuch. Carl-Hanser-Verlag, 1993, vol. VII, 113-115

- Kunststoff-Handbuch. Carl-Hanser-Verlag, 1966, vol. VII, 103-113